# EUROPEAN PATENT APPLICATION

(11) **EP 4 092 067 A1**
(43) Date of publication of application: **23.11.2022**
(21) Application number: 21305668.2
(22) Date of filing: 21.05.2021
(51) Int. Cl.: C08G 63/08, C08G 63/82

(54) **PROCESS FOR PREPARING TAILOR-MADE LACTIDE COPOLYMERS AND LACTIDE COPOLYMERS THEREBY OBTAINED**

(71) Applicant: TotalEnergies OneTech, 92400 Courbevoie (FR); Université de Rennes 1, 35065 Rennes Cedex (FR); Centre national de la recherche scientifique, 75016 Paris (FR)
(72) Inventor: Carpentier, Jean-François, 35690 Acigné (FR); Guillaume, Sophie, 35500 Vitré (FR); Brisse, Julien, 1060 Bruxelles (BE); Godina, Alexei, 92800 Puteaux (FR); Slawinski, Martine, 1400 Nivelles (BE)
(74) Representative: Raboin, Jean-Christophe

(57) **Abstract**

The invention relates to a process for the preparation of a lactide copolymer comprising the step of copolymerizing a lactide monomer and/or polylactic acid in the presence of at least one catalyst and optionally at least one initiator with at least one second compound, wherein said second compound comprises
a1) at least one beta-lactone of formula (I), stereoisomers, racemics or mixtures thereof; 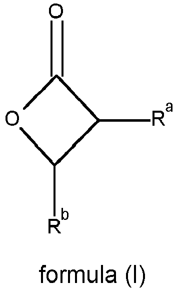 wherein each of **R^{a}** and **R^{b}** is independently hydrogen or is selected from the group comprising, C₂₋₁₈alkyl, C₂₋₁₈alkenyl, C₂₋₁₈alkynyl, C₆₋₁₂aryl, C₆₋₁₂arylC₁₋₁₈alkyl, heteroC₁₋₁₈alkyl, heteroC₂₋₁₈alkenyl, -(CH₂ₕ₁-Z¹-**R^{g}**, -(CH₂)ₛ₂-C(=O)O**R^{h}**, and -(CH₂)ₛ₃-N(**Rⁱ**)₂, wherein each group can be unsubstituted or substituted with one or more substituents each independently selected from the group comprising halogen, C₁₋₁₈alkyloxy, and -N(**R^{j}**)₂, and wherein each **R^{j}** is independently selected from the group comprising hydrogen, C₁₋₁₈alkyl, C₂₋₁₈alkenyl, C₂₋₁₈alkynyl, C₆₋₁₂aryl, and C₆₋₁₂arylC₁₋₁₈alkyl;
wherein **s1**, **s2** and **s3** are each independently an integer selected from 0 to 18;
wherein **Z¹** is selected from the group consisting of N, S, P and O;
wherein **R^{g}** and **R^{h}** are each independently selected from the group comprising C₁₋₁₈alkyl, C₂₋₁₈alkenyl, C₂₋₁₈alkynyl, C₆₋₁₂aryl, and C₆₋₁₂arylC₁₋₁₈alkyl;
wherein each **Rⁱ** is independently selected from the group comprising hydrogen, C₁-₁₈alkyl, C₂₋₁₈alkenyl, C₂₋₁₈alkynyl, C₆₋₁₂aryl, and C₆₋₁₂arylC₁₋₁₈alkyl; and
and/or

a2) at least one diolide of formula (II), stereoisomers, racemics or mixtures thereof 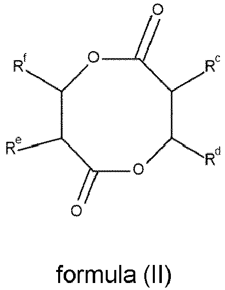 wherein each of **R^{c}**, **R^{d}, R^{e} and R^{f}** is independently hydrogen or is selected from the group comprising C₁₋₁₈alkyl, C₂₋₁₈alkenyl, C₂₋₁₈alkynyl, C₆₋₁₂aryl, C₆₋₁₂arylC₁₋₁₈alkyl, heteroC₁₋₁₈alkyl, heteroC₂₋₁₈alkenyl -(CH₂)ₜ₁-Z²-**R^{k}**, -(CH₂)ₜ₂-C(=O)O**R^{l}**, and -(CH₂)ₜ₃-N(**R^{m}**)₂, wherein each group can be unsubstituted or substituted with one or more substituents each independently selected from the group comprising halogen, C₁₋₁₈alkyloxy, and -N(**Rⁿ**)₂, and wherein each **Rⁿ** is independently selected from the group comprising hydrogen, C₁₋₁₈alkyl, C₂₋₁₈alkenyl, C₂₋₁₈alkynyl, C₆₋₁₂aryl, and C₆₋₁₂arylC₁₋₁₈alkyl; and
wherein **t1**, **t2** and **t3** are each independently an integer selected from 0 to 18;
wherein Z² is selected from the group consisting of N, S, P and O;
wherein **R^{k}** and **R^{l}** are each independently selected from the group comprising C₁₋₁₈alkyl, C₂₋₁₈alkenyl, C₂₋₁₈alkynyl, C₆₋₁₂aryl, and C₆₋₁₂arylC₁₋₁₈alkyl; and
wherein each **R^{m}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl.

## Description

### FIELD OF THE INVENTION

The invention relates to the technical field of lactide copolymers and their preparation process. In particular, the present invention relates to a process for the preparation of tailor-made copolymers of lactide, in a copolymerisation process, wherein a lactide monomer and/or poly(lactic acid) is copolymerised with a) at least one second compound, wherein said second compound comprises at least one beta-lactone and/or at least one diolide, and b) optionally one or more additional cyclic esters. The present invention also relates to lactide copolymers having tailor-made composition and properties obtained or obtainable by a process of the invention.

### BACKGROUND OF THE INVENTION

The production of polymers utilizing renewable resources has been a field of increasing interest for many years. However, a main challenge in the development of biopolymers, i.e. biodegradable and biobased polymers, is the control of cost and properties of the polymers to fit customers' preferences and continuously evolving regulation.

Poly(lactic acid) (PLA) (also referred herein as polylactide) is one of the most promising biodegradable materials for commercially replacing non-degradable materials such as poly(ethylene terephthalate) and polystyrene. The main advantages of PLA production over the conventional plastic materials are that PLA can be manufactured from renewable resources such as corn, sugar cane or other carbohydrate sources. Such manufacture may involve the fermentation of starch, sugar, or other renewable organic substrates into lactic acid. PLA can then, in principle, be synthesized by direct polycondensation of lactic acid, i.e. lactate monomers. However, PLA is usually prepared by ring-opening polymerization (ROP) of lactide, the cyclic dimer of lactic acid, which in turn is usually manufactured by polycondensation of lactic acid into PLA oligomers, followed by depolymerization of these oligomers by a so-called 'backbiting' mechanism in the presence of a suitable catalyst. After purification, the produced lactide can be converted into PLA of controlled molecular weight by means of a ring-opening polymerization reaction (ROP) in the presence of a polymerization catalyst. Poly(lactic acid) (PLA) however is a brittle polyester that shows limited compostability, and its applicability has been relatively limited, inter alia because its heat distortion temperature, toughness, and degradation rate are unsatisfactory.

Various approaches have been attempted to obtain lactide-based polymeric materials having tuneable or tailored product characteristics. For example, improvement of the material properties of PLA has been attempted by blending with other polymers including polyhydroxyalkanoates (PHAs). Polyhydroxyalkanoates (PHAs) are another commercially important class of biodegradable aliphatic polyesters that are produced by an extensive variety of microorganisms for intracellular carbon and energy storage purposes. However, the production of PHA via such biological pathways involves high cost and instabilities on molecular weights (Mw) and structures, thus instability on thermo-mechanical properties. The high cost is the result of complicated bioprocessing associated with sterilization, low conversion of carbon substrates to PHA products, and slow growth of microorganisms as well as difficulty of downstream separation. Moreover, above-referred polymer blending methods are not effective to adequately control the resulting materials properties and these materials therefore tend to have limited applications.

Accordingly, it is an object of the present invention to provide improved processes for the preparation of lactide-based polymeric materials having improved and/or controllable properties. It is an object of the present invention to provide improved processes for the preparation of lactide-based copolymers having improved and/or controllable properties. It is in particular an object of the present invention to provide improved processes for the preparation of copolymers of lactide with cyclic esters including at least one beta-lactone and/or at least one diolide, and optionally one or more additional cyclic esters different from said beta-lactone and said diolide.

The present invention aims to provide polymerization processes that allow the production of lactide copolymers in an efficient and economical way.

It is a further object of the invention to provide polymerization processes that allow the preparation of lactide copolymers having well-defined properties, and in particular having tunable and controlled properties.

It is also an object of the invention to provide a polymerization process allowing to prepare lactide copolymers showing improved properties, in particular showing improved biodegradability.

### SUMMARY OF THE INVENTION

The present inventors have now found that any one of the objects above can be attained by using the processes as presently claimed.

According to a first aspect of the present invention, a process for preparing lactide copolymers is provided. The process for preparing lactide copolymers of the invention comprises the step of copolymerizing lactide monomer and/or poly(lactic acid) with at least one second compound in the presence of at least one catalyst and optionally at least one initiator. In particular, the present invention relates to a process for the preparation of a lactide copolymer comprising the step of copolymerizing a lactide monomer and/or polylactic acid in the presence of at least one catalyst and optionally at least one initiator with
a) at least one second compound, wherein said second compound comprises
   **a1**) at least one beta-lactone of formula (I), stereoisomers, racemics or mixtures thereof; 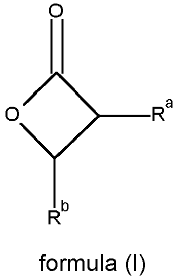
      wherein each of **R^{a}** and **R^{b}** is independently hydrogen or is selected from the group comprising, C₂-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₛ₁-Z¹-**R^{g}**, -(CH₂)ₛ₂-C(=O)O**R^{h}**, and -(CH₂)ₛ₃-N(**Rⁱ**)₂, wherein each group can be unsubstituted or substituted with one or more substituents each independently selected from the group comprising halogen, C₁₋₁₈alkyloxy, and - N(**R^{j}**)₂, and wherein each **R^{j}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
      wherein **s1**, **s2** and **s3** are each independently an integer selected from 0 to 18;
      wherein **Z¹** is selected from the group consisting of P, N, S and O;
      wherein **R^{g}** and **R^{h}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl;
      wherein each **Rⁱ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and
      and/or
   **a2**) at least one diolide of formula (II), stereoisomers, racemics or mixtures thereof 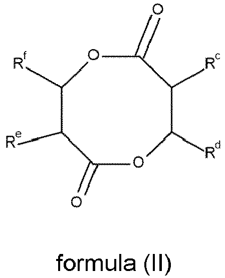
      wherein each of **R**^{c}, **R^{d}**, **R^{e}and R^{f}** is independently hydrogen or is selected from the group comprising C₁₋₁₈alkyl, C₂₋₁₈alkenyl, C₂₋₁₈alkynyl, C₆₋₁₂aryl, C₆₋₁₂arylC₁₋₁₈alkyl, heteroC₁₋₁₈alkyl, heteroC₂₋₁₈alkenyl -(CH₂)ₜ₁-Z²-**R^{k}**, -(CH₂)ₜ₂-C(=O)O**R^{l}**, and -(CH₂)ₜ₃-N(R^{m})₂, wherein each group can be unsubstituted or substituted with one or more substituents each independently selected from the group comprising halogen, C₁₋₁₈alkyloxy, and -N(**Rⁿ**)₂, and wherein each **Rⁿ** is independently selected from the group comprising hydrogen, C₁₋₁₈alkyl, C₂₋₁₈alkenyl, C₂₋₁₈alkynyl, C₆₋₁₂aryl, and C₆₋₁₂arylC₁₋₁₈alkyl; and
      wherein **t1**, **t2** and **t3** are each independently an integer selected from 0 to 18;
      wherein **Z²** is selected from the group consisting of P, N, S and O;
      wherein **R^{k}** and **R^{l}** are each independently selected from the group comprising C₁₋₁₈alkyl, C₂-₁₈alkenyl, C₂-₁₈alkynyl, C₆₋₁₂aryl, and C₆₋₁₂arylC₁₋₁₈alkyl;
      wherein each **R^{m}** is independently selected from the group comprising hydrogen, C₁₋₁₈alkyl, C₂-₁₈alkenyl, C₂-₁₈alkynyl, C₆₋₁₂aryl, and C₆₋₁₂arylC₁₋₁₈alkyl; and
b) optionally one or more cyclic esters, stereoisomers, racemics, or mixtures thereof, wherein said cyclic ester is different from said second compound; and preferably wherein said cyclic ester is selected from the group comprising gamma-lactones, delta-lactones, epsilon-lactones, and glycolides, wherein each group can be unsubstituted or substituted with one or more substituents each independently selected from the group comprising C₁₋₆alkyl, C₁₋₆alkoxy, -NH₂, mono(C₁₋₆alkyl)amino, di(C₁₋₆alkyl)amino, C₁₋₆alkyloxyC₁₋₆alkyl and C₁₋₆alkyloxycarbonyl.

The process according to the present invention is based on a copolymerisation of lactide monomer and/or polylactic acid with at least a second compound which comprises a beta-lactone and/or a diolide as defined herein, in the presence of at least one catalyst, and optionally an initiator, and allows to chemically produce lactide copolymers with controlled properties, e.g. in terms of physicochemical properties and/or biodegradability. The present invention advantageously provides a process allowing to obtain lactide copolymers with tuneable properties and improved biodegradability.

The process according to the invention involves simultaneous copolymerisation processes, in which the reactants, i.e. a lactide monomer and/or polylactide and at least one second compound (i.e. a diolide and/or a beta-lactone as defined herein, and optionally one or more other cyclic esters as defined herein) are reacted at the same time in the present process.

The process according to the invention also involves sequential copolymerisation processes, in which the reactants, i.e. a lactide monomer and/or polylactide and at least one second compound (i.e. a diolide and/or a beta-lactone as defined herein, and optionally one or more other cyclic esters as defined herein), are added to the copolymerisation process in at least two different steps. In the case of sequential processes, the order of addition of the compounds is not particularly limited, and for instance lactide monomer and/or polylactide may be added before a second compound or *vice versa.* In certain preferred embodiments of a sequential process as described herein, the compound that is added first to the process (e.g. a lactide monomer) is first 'consumed' (i.e. fully converted) prior to the addition of the next compound (e.g. a diolide or a beta-lactone or optionally another cyclic esters).

By applying a process according to the invention, lactide copolymers properties (e.g. stereoregularity, microstructure, molar masses, degradation, etc.) can be modulated and controlled (e.g. by tuning the feed of the compounds) resulting in a balance between copolymer properties and their end-of-life for a given market. The present invention surprisingly provides copolymerization processes that are convenient and efficient, yielding copolymers with tailored properties, despite the difference in reactivity of the compounds under the given polymerization conditions (e.g. temperature, catalyst, initiator). The processes of the present invention allow the production of lactide copolymers with improved properties in an efficient way.

In a second aspect, the present invention also provides lactide copolymers obtained or obtainable by a process according to the present invention.

In a third aspect, the present invention also encompasses an article comprising a lactide copolymer according to the second aspect of the invention, or a lactide copolymer prepared according to the process of the first aspect of the invention.

The independent and dependent claims set out particular and preferred features of the invention. Features from the dependent claims may be combined with features of the independent or other dependent claims as appropriate.

The above and other characteristics, features and advantages of the present invention will become apparent from the following detailed description.

### DETAILED DESCRIPTION OF THE INVENTION

When describing the invention, the terms used are to be construed in accordance with the following definitions, unless a context dictates otherwise.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art.

The terms "comprising", "comprises" and "comprised of" as used herein are synonymous with "including", "includes" or "containing", "contains", and are inclusive or open-ended and do not exclude additional, non-recited members, elements, or method steps. It will be appreciated that the terms "comprising", "comprises" and "comprised of" as used herein comprise the terms "consisting of", "consists" and "consists of".

As used in the specification and the appended claims, the singular forms "a", "an," and "the" include plural referents unless the context clearly dictates otherwise. By way of example, "a step" means one step or more than one step.

Unless defined otherwise, all technical and scientific terms used herein have the same meaning as is commonly understood by one of skill in the art. All publications referenced herein are incorporated by reference thereto.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the end point values themselves (e.g. from 1.0 to 5.0 includes both 1.0 and 5.0). Any numerical range recited herein is intended to include all sub-ranges subsumed therein.

The term "about" as used herein when referring to a measurable value such as a parameter, an amount, a temporal duration, and the like, is meant to encompass variations of +/-10% or less, preferably +/-5% or less, more preferably +/-1% or less, of and from the specified value, insofar such variations are appropriate to perform in the disclosed invention. It is to be understood that the value to which the modifier "about" refers is itself also specifically, and preferably, disclosed.

When describing the present invention, the terms used are to be construed in accordance with the following definitions, unless a context dictates otherwise.

Whenever the term "substituted" is used in the present invention, it is meant to indicate that one or more hydrogens on the atom indicated in the expression using "substituted" is replaced with a selection from the indicated group, provided that the indicated atom's normal valency is not exceeded, and that the substitution results in a chemically stable compound, i.e. a compound that is sufficiently robust to survive isolation to a useful degree of purity from a reaction mixture.

The term "alkyl" as a group or part of a group, refers to a hydrocarbyl group of formula CₙH₂ₙ₊₁ wherein n is a number greater than or equal to 1. Alkyl groups may be linear or branched and may be substituted as indicated herein. Generally, alkyl groups of this invention comprise from 1 to 20 carbon atoms, preferably from 1 to 18 carbon atoms, preferably from 1 to 12 carbon atoms, preferably from 1 to 10 carbon atoms, preferably from 1 to 6 carbon atoms, more preferably 1, 2, 3, 4, 5, 6 carbon atoms. When a subscript is used herein following a carbon atom, the subscript refers to the number of carbon atoms that the named group may contain. For example, the term "C₁₋₂₀alkyl", as a group or part of a group, refers to a hydrocarbyl group of formula -CₙH₂ₙ₊₁ wherein n is a number ranging from 1 to 20. Thus, for example, C₁₋₂₀alkyl groups include all linear, or branched alkyl groups having 1 to 20 carbon atoms, and thus includes for example methyl, ethyl, n-propyl, *i*-propyl, 2-methyl-ethyl, butyl and its isomers (e.g. n-butyl, *i*-butyl and *t*-butyl); pentyl and its isomers, hexyl and its isomers, heptyl and its isomers, octyl and its isomers, nonyl and its isomers, decyl and its isomers, undecyl and its isomers, dodecyl and its isomers, tridecyl and its isomers, tetradecyl and its isomers, pentadecyl and its isomers, hexadecyl and its isomers, heptadecyl and its isomers, octadecyl and its isomers, and the like. For example, C₁₋₁₀alkyl includes all linear, or branched alkyl groups having 1 to 10 carbon atoms, and thus includes for example methyl, ethyl, n-propyl, *i-*propyl, 2-methyl-ethyl, butyl, and its isomers (e.g. n-butyl, *i*-butyl and *t*-butyl); pentyl and its isomers, hexyl and its isomers, heptyl and its isomers, octyl and its isomers, nonyl and its isomers, decyl and its isomers and the like. For example, C₁₋₆alkyl includes all linear, or branched alkyl groups having 1 to 6 carbon atoms, and thus includes for example methyl, ethyl, n-propyl, *i*-propyl, 2-methyl-ethyl, butyl, and its isomers (e.g. n-butyl, *i*-butyl and *t*-butyl); pentyl and its isomers, hexyl and its isomers. When the suffix "ene" is used in conjunction with an alkyl group, i.e. "alkylene", this is intended to mean the alkyl group as defined herein having two single bonds as points of attachment to other groups. Alkylene groups may be linear or branched and may be substituted as indicated herein. Non-limiting examples of alkylene groups include methylene (-CH₂-), ethylene (-CH₂-CH₂-), methylmethylene (-CH(CH₃)-), 1-methyl-ethylene (-CH(CH₃)-CH₂-), n-propylene (-CH₂-CH₂-CH₂-), 2-methylpropylene (-CH₂-CH(CH₃)-CH₂-), 3-methylpropylene (-CH₂-CH₂-CH(CH₃)-), n-butylene (-CH₂-CH₂-CH₂-CH₂-), 2-methylbutylene (-CH₂-CH(CH₃)-CH₂-CH₂-), 4-methylbutylene (-CH₂-CH₂-CH₂-CH(CH₃)-), pentylene and its chain isomers, hexylene and its chain isomers.

The term "halo" or "halogen", as a group or part of a group, is generic for fluoro, chloro, bromo or iodo.

The term "haloalkyl" as a group or part of a group, refers to an alkyl group having the meaning as defined above wherein one, two, or three hydrogen atoms are each replaced with a halogen as defined herein. Non-limiting examples of such haloalkyl groups include chloromethyl, 1-bromoethyl, fluoromethyl, difluoromethyl, trifluoromethyl, 1,1,1-trifluoroethyl and the like.

The term "alkenyl" as a group or part of a group, refers to an unsaturated hydrocarbyl group, which may be linear, or branched, comprising one or more carbon-carbon double bonds. Generally, alkenyl groups of this invention comprise from 2 to 20 carbon atoms, preferably from 2 to 18 carbon atoms, preferably from 2 to 10 carbon atoms, preferably from 2 to 8 carbon atoms, preferably from 2 to 6 carbon atoms. When a subscript is used herein following a carbon atom, the subscript refers to the number of carbon atoms that the named group may contain. Examples of alkenyl groups include, but are not limited to ethylene or vinyl (-CH=CH₂), allyl (-CH₂CH=CH₂), 2-propenyl, 2-butenyl, 3-butenyl, 2-pentenyl and its isomers, 2-hexenyl and its isomers, 5-hexenyl (-CH₂CH₂CH₂CH₂CH=CH₂) 2,4-pentadienyl, and the like. The term "alkenylene" as used herein each refer to a branched or straight chain hydrocarbon of 2-20 carbon atoms (more in particular C₂₋₁₈, C₂₋₁₀, C₂₋₈ or C₂₋₆ carbon atoms) with at least one site (usually 1 to 3, preferably 1) of unsaturation, namely a carbon-carbon, sp2 double bond, and having two monovalent centers derived by the removal of two hydrogen atoms from the same or two different carbon atoms of a parent alkene.

The term "alkynyl" as a group or part of a group, refers to an unsaturated hydrocarbyl group, which may be linear, or branched, comprising one or more carbon-carbon triple bonds. Generally, alkynyl groups of this invention comprise from 2 to 20 carbon atoms, preferably from 2 to 18 carbon atoms, preferably from 2 to 10 carbon atoms, preferably from 2 to 8 carbon atoms, preferably from 2 to 6 carbon atoms. When a subscript is used herein following a carbon atom, the subscript refers to the number of carbon atoms that the named group may contain.

The term "aryl", as a group or part of a group, refers to a polyunsaturated, aromatic hydrocarbyl group having a single ring (i.e. phenyl) or multiple aromatic rings fused together (e.g. naphthyl), or linked covalently, typically containing 5 to 30 atoms, wherein at least one ring is aromatic. The aromatic ring may optionally include one to two additional rings (either cycloalkyl, heterocyclyl or heteroaryl) fused thereto. Examples of suitable aryl include C₆₋₃₀aryl, or C₆₋₁₈aryl, or C₆₋₁₂aryl, or C₆₋₁₀aryl, or C₅₋₁₀aryl. Non-limiting examples of aryl comprise phenyl, biphenylyl, biphenylenyl, or 1-or 2-naphthanelyl; 1-, 2-, 3-, 4-, 5- or 6-tetralinyl (also known as "1,2,3,4-tetrahydronaphtalene); 1-, 2-, 3-, 4-, 5-, 6-, 7- or 8-azulenyl, 4-, 5-, 6 or 7-indenyl; 4- or 5-indanyl; 5-, 6-, 7- or 8-tetrahydronaphthyl; 1,2,3,4-tetrahydronaphthyl; and 1,4-dihydronaphthyl; 1-, 2-, 3-, 4- or 5-pyrenyl. When the suffix "ene" is used in conjunction with an aryl group, this is intended to mean the aryl group as defined herein having two single bonds as points of attachment to other groups.

The term "arylalkyl", as a group or part of a group, means an alkyl as defined herein, wherein at least one hydrogen atom is replaced by at least one aryl as defined herein. Preferred arylalkyls include C₅₋₃₀arylC₁₋₂₀alkyl, C₆₋₃₀arylC₁₋₂₀alkyl, or C₆₋₃₀arylC₁₋₁₈alkyl, or C₆₋₁₂arylC₁₋₁₈alkyl, or C₆₋₁₂arylC₁₋₁₀alkyl, or C₆₋₁₀arylC₁₋₆alkyl, or C₅₋₁₀arylC₁₋₆alkyl. Non-limiting examples of arylalkyl groups include, but are not limited to, benzyl, phenethyl, dibenzylmethyl, methylphenylmethyl, 3-(2-naphthyl)-butyl, 2-phenylethan-1-yl, 2-phenylethen-1-yl, naphthylmethyl, 2-naphthylethyl, and the like.

The term "alkylaryl" as a group or part of a group, means an aryl as defined herein wherein at least one hydrogen atom is replaced by at least one alkyl as defined herein. Preferred alkylaryls include for instance C₁₋₂alkylC₅₋₃₀aryl, C₁₋₁₈alkylC₆₋₃₀aryl, or C₁₋₁₂alkylC₆₋₁₂aryl, or C₁₋₆alkylC₆₋₁₀aryl.

The term "alkoxy" or "alkyloxy", as a group or part of a group, refers to a group having the Formula -O**R^{x1}** wherein **R^{x1}** is alkyl as defined herein above. Examples of suitable alkyloxy include C₁₋₂₀alkyloxy, or C₁₋₁₈alkyloxy, or C₁₋₁₂alkyloxy, or C₁₋₆alkyloxy. Non-limiting examples of suitable alkoxy include, but are not limited to methoxy, ethoxy, propoxy, isopropoxy, butoxy, isobutoxy, sec-butoxy, tert-butoxy, pentyloxy and hexyloxy.

The term "aryloxy", as a group or part of a group, refers to a group having the formula -O**R^{x2}** wherein **R^{x2}** is aryl as defined herein above. Examples of suitable aryloxy include C₅₋₃₀aryloxy, or C₆₋₃₀aryloxy, or C₆₋₁₂aryloxy,

The term "cycloalkyl", as a group or part of a group, refers to a cyclic alkyl group, that is to say, a monovalent, saturated, hydrocarbyl group having 1 or more cyclic structure. Generally, cycloalkyl groups of this invention comprise from 3 to 20 carbon atoms, preferably from 3 to 12 carbon atoms, preferably from 3 to 10 carbon atoms, preferably from 3 to 8 carbon atoms, or from 3 to 6 carbon atoms, or from 5 to 6 carbon atoms. Cycloalkyl includes all saturated hydrocarbon groups containing 1 or more rings, including monocyclic or bicyclic groups. The further rings of multi-ring cycloalkyls may be either fused, bridged and/or joined through one or more spiro atoms. When a subscript is used herein following a carbon atom, the subscript refers to the number of carbon atoms that the named group may contain. For example, the term "C₃₋₂₀cycloalkyl", a cyclic alkyl group comprising from 3 to 20 carbon atoms. For example, the term "C₃₋₁₀cycloalkyl", a cyclic alkyl group comprising from 3 to 10 carbon atoms. For example, the term "C₃₋₈cycloalkyl", a cyclic alkyl group comprising from 3 to 8 carbon atoms. For example, the term "C₃₋₆cycloalkyl", a cyclic alkyl group comprising from 3 to 6 carbon atoms. Examples of C₃₋₁₂cycloalkyl groups include but are not limited to adamantly, cyclopropyl, cyclobutyl, cyclopentyl, cyclohexyl, cycloheptyl, cyclooctyl, bicycle[2.2.1]heptan-2yl, (1S,4R)-norbornan-2-yl, (1R,4R)-norbornan-2-yl, (1S,4S)-norbornan-2-yl, (1R,4S)-norbornan-2-yl.

The term "hydroxyl" or "hydroxy", as a group or part of a group, refers to the group -OH.

The term "amino" refers to the group -NH₂.

The term "mono- or di-alkylamino", as a group or part of a group, refers to a group of formula -N(**R^{x3}**)(**R^{x1}**) wherein **R^{x3}** is hydrogen or alkyl as defined herein, and **R^{x1}** is alkyl as defined herein. Thus, "alkylamino" include mono-alkyl amino group (e.g. mono-alkylamino group such as methylamino and ethylamino), and di-alkylamino group (e.g. di-alkylamino group such as dimethylamino and diethylamino). Non-limiting examples of suitable mono-alkylamino groups include mono-C₁₋₆alkylamino groups such as n-propylamino, isopropylamino, n-butylamino, i-butylamino, sec-butylamino, t-butylamino, pentylamino, n-hexylamino, and the like. Non limiting examples of suitable di-alkylamino groups include di-C₁₋₆alkylamino group such as dimethylamino and diethylamino, di-*n*-propylamino, di-*i-*propylamino, ethylmethylamino, methyl-n-propylamino, methyl-*i*-propylamino, *n-*butylmethylamino, *i*-butylmethylamino, *t*-butylmethylamino, ethyl-*n*-propylamino, ethyl-*i-*propylamino, n-butylethylamino, i-butylethylamino, *t*-butylethylamino, di-*n*-butylamino, di-*i-*butylamino, methylpentylamino, methylhexylamino, ethylpentylamino, ethylhexylamino, propylpentylamino, propylhexylamino, and the like.

The term "carbonyl" as used herein means carbon atom bonded to oxygen with a double bond, i.e., C=O.

The term "alkylthio", as a group or part of a group, refers to a group having the formula -S-**R^{x1}** wherein **R^{x1}** is alkyl as defined herein above. Non-limiting examples of alkylthio groups include methylthio (-SCH₃), ethylthio (-SCH₂CH₃), n-propylthio, isopropylthio, n-butylthio, isobutylthio, sec-butylthio, tert-butylthio and the like.

The term "alkyl-SO2", as a group or part of a group, refers to a group having the formula - SO2-**R^{x1}** wherein **R^{x1}** is alkyl as defined herein above. Non-limiting examples of alkyl-SO2 groups include methyl-SO2, ethyl-SO2 and the like.

The term "heterocyclyl", as a group or part of a group, refers to non-aromatic, fully saturated or partially unsaturated ring system of 3 to 18 atoms including at least one N, O, S, or P (for example, 3 to 7 member monocyclic, 7 to 11 member bicyclic, or comprising a total of 3 to 10 ring atoms) wherein at least one ring is a heterocyclyl and wherein said ring may be fused to an aryl, cycloalkyl, heteroaryl and/or heterocyclyl ring. Each ring of the heterocyclyl may have 1, 2, 3 or 4 heteroatoms selected from N, P, O or S, where the N and S heteroatoms may optionally be oxidized and the N heteroatoms may optionally be quaternized; and wherein at least one carbon atom of heterocyclyl can be oxidized to form at least one C=O. The heterocyclic may be attached at any heteroatom or carbon atom of the ring or ring system, where valence allows. The rings of multi-ring heterocyclyls may be fused, bridged and/or joined through one or more spiro atoms.

The term "heteroaryl", as a group or part of a group, refers to an aromatic ring system of 5 to 30 atoms including at least one N, O, S, or P, containing 1 or more rings, such as 1 or 2 or 3 or 4 rings, which can be fused together or linked covalently, each ring typically containing 5 to 6 atoms; at least one of said ring is aromatic, where the N and S heteroatoms may optionally be oxidized and the N heteroatoms may optionally be quaternized, and wherein at least one carbon atom of said heteroaryl can be oxidized to form at least one C=O. Such rings may be fused to an aryl, cycloalkyl, heteroaryl and/or heterocyclyl ring. Examples of heteroaryl include but are not limited to pyridyl, pyridazinyl, pyrimidinyl, pyrazinyl, s-triazinyl, oxazolyl, imidazolyl, thiazolyl, isoxazolyl, pyrazolyl, isothiazolyl, furyl, thienyl, and pyrrolyl.

The term "heteroalkyl" as used herein refers to an alkyl wherein one or more carbon atoms are replaced by one or more atoms independently selected from the group comprising O, P, N and S with the proviso that said chain may not contain two adjacent O atoms or two adjacent S atoms. Said one or more atoms replacing said carbon atoms may be positioned at the beginning of the hydrocarbon chain, in the hydrocarbon chain or at the end of the hydrocarbon chain. This means that one or more -CH₃ of said alkyl can be replaced by -NH₂ and/or that one or more -CH₂- of said alkyl can be replaced by -NH-, -O- or -S-. In some embodiments the term heteroalkyl encompasses an alkyl which comprises one or more heteroatoms in the hydrocarbon chain, said heteroatoms being selected from the atoms consisting of O, S, P, and N, whereas the heteroatoms may be positioned at the beginning of the hydrocarbon chain, in the hydrocarbon chain or at the end of the hydrocarbon chain. The S atoms in said chains may be optionally oxidized with one or two oxygen atoms, to afford sulfoxides and sulfones, respectively. Furthermore, the heteroalkyl groups in the compounds of the present invention can contain an oxo or thio group at any carbon or heteroatom that will result in a stable compound. Exemplary heteroalkyl groups include, but are not limited to, alcohols, alkyl ethers, primary, secondary, and tertiary alkyl amines, amides, ketones, esters, alkyl sulfides, and alkyl sulfones. The term heteroalkyl thus comprises but is not limited to -R^{x4}-S-; -R^{x4}-O-, -R^{x4}-N(R^{x5})₂ -O-R^{x1}, -NR^{x5}-R^{x1}, -R^{x4}-O-R^{x1}, -O-R^{x4}-S-R^{x1}, -S-R^{x4}-, -O-R^{x4}-NR^{x5}R^{x1}, -NR^{x5}-R^{x4}-S-R^{x1}, -R^{x4}-NR^{x5}-R^{x1}, -NR^{x5}R^{x4}-S-R^{x1}, -S-R^{x1}, wherein R^{x4} is alkylene, R^{x1} is alkyl, and R^{x5} is hydrogen or alkyl as defined herein. In particular embodiments, the term encompasses heteroC₁₋₁₂alkyl, heteroC₁₋₉alkyl and heteroC₁₋₆alkyl. In some embodiments heteroalkyl is selected from the group comprising alkyloxy, alkyl-oxy-alkyl, (mono or di)alkylamino, (mono or di-)alkyl-aminoalkyl, alkylthio, and alkyl-thio-alkyl.

The term "heteroalkenyl" as used herein refers to an alkenyl wherein one or more carbon atoms are replaced by one or more atoms independently selected from O, N, S and P, with the proviso that said chain may not contain two adjacent O atoms or two adjacent S atoms. Said one or more atoms replacing said carbon atoms may be positioned at the beginning of the hydrocarbon chain, in the hydrocarbon chain or at the end of the hydrocarbon chain. This means that one or more -CH₃ of said alkenyl can be replaced by -NH₂, that one or more -CH₂-of said alkenyl can be replaced by -NH-, -O- or -S- and/or that one or more -CH= of said alkenyl can be replaced by -N=. In some embodiments the term heteroalkenyl encompasses an alkenyl which comprises one or more heteroatoms in the hydrocarbon chain, said heteroatoms being selected from the atoms consisting of O, S, P, and N, whereas the heteroatoms may be positioned at the beginning of the hydrocarbon chain, in the hydrocarbon chain or at the end of the hydrocarbon chain. The S atoms in said chains may be optionally oxidized with one or two oxygen atoms, to afford sulfoxides and sulfones, respectively. Furthermore, the heteroalkyl groups in the compounds of the present invention can contain an oxo or thio group at any carbon or heteroatom that will result in a stable compound. The term heteroalkenyl thus comprises imines, -O-alkenyl, -NH-alkenyl, -N(alkenyl)₂, - N(alkyl)(alkenyl), and -S-alkenyl. The term heteroalkenyl thus comprises but is not limited to -R^{x7}-O-, -O-R^{x6}, -NH-(R^{x6}), -N=R^{x6}, -N(R^{x6}))₂, -N(R^{x1})(R^{x6}), -NH-NH-R^{x6}, -R^{x7}=N-N=R^{x6}, - R^{x7}=N-N=, -R^{x7}-S-, -S-R^{x6} wherein R^{x1} is alkyl, R^{x6} is alkenyl and R^{x7} is alkenylene as defined herein. In particular embodiments, the term heteroalkenyl encompasses heteroC₂₋₁₈alkenyl, heteroC₂₋₁₂alkenyl, heteroC₂₋₉alkenyl and heteroC₂₋₆alkenyl. In some embodiments heteroalkenyl is selected from the group comprising alkenyloxy, alkenyl-oxy-alkenyl, (mono or di-)alkenylamino, (mono or di-)alkenyl-amino-alkenyl, alkenylthio, and alkenyl-thio-alkenyl.

The terms described above and others used in the specification are well understood to those skilled in the art.

Preferred statements (features) and embodiments of the processes, lactide copolymers and uses of this invention are set herein below. Each statement and embodiment of the invention so defined may be combined with any other statement and/or embodiment unless clearly indicated to the contrary. In particular, any feature indicated as being preferred or advantageous may be combined with any other feature or features or statements indicated as being preferred or advantageous. Hereto, the present invention is in particular captured by any one or any combination of one or more of the below numbered statements and embodiments, with any other aspect and/or embodiment.

### embodiments, with any other aspect and/or embodiment.

1. A process for the preparation of a lactide copolymer comprising the step of copolymerizing a lactide monomer and/or polylactic acid in the presence of at least one catalyst and optionally at least one initiator with
   a) at least one second compound, wherein said second compound comprises
      a1) at least one beta-lactone of formula (I), stereoisomers, racemics or mixtures thereof; 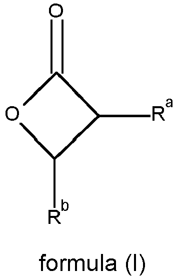
         wherein each of **R^{a}** and **R^{b}** is independently hydrogen or is selected from the group comprising, C₂-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₛ₁-Z¹-**R^{g}**, -(CH₂)ₛ₂-C(=O)O**R^{h}**, and -(CH₂)ₛ₃-N(**Rⁱ**)₂,
         wherein each group can be unsubstituted or substituted with one or more substituents each independently selected from the group comprising halogen, C₁₋₁₈alkyloxy, and - N(**R^{j}**)₂, and wherein each **R^{j}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
         wherein **s1**, **s2** and **s3** are each independently an integer selected from 0 to 18;
         wherein **Z¹** is selected from the group consisting of N, S, P and O;
         wherein **R^{g}** and **R^{h}** are each independently selected from the group comprising C₁₋₁₈alkyl, C₂-₁₈alkenyl, C₂-₁₈alkynyl, C₆₋₁₂aryl, and C₆₋₁₂arylC₁₋₁₈alkyl;
         wherein each **Rⁱ** is independently selected from the group comprising hydrogen, C₁₋₁₈alkyl, C₂-₁₈alkenyl, C₂-₁₈alkynyl, C₆₋₁₂aryl, and C₆₋₁₂arylC₁₋₁₈alkyl; and
         and/or
      a2) at least one diolide of formula (II), stereoisomers, racemics or mixtures thereof 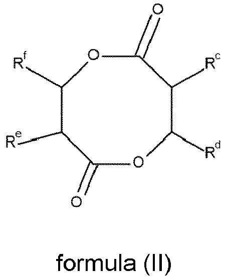
         wherein each of **R^{c}**, **R^{d}**, **R^{e} and R^{f}** is independently hydrogen or is selected from the group comprising C₁₋₁₈alkyl, C₂₋₁₈alkenyl, C₂₋₁₈alkynyl, C₆₋₁₂aryl, C₆₋₁₂arylC₁₋₁₈alkyl, heteroC₁₋₁₈alkyl, heteroC₂₋₁₈alkenyl -(CH₂)ₜ₁-Z²-**R^{k}**, -(CH₂)ₜ₂-C(=O)O**R^{I}**, and -(CH₂)ₜ₃-N(**R^{m}**)₂, wherein each group can be unsubstituted or substituted with one or more substituents each independently selected from the group comprising halogen, C₁₋₁₈alkyloxy, and -N(**Rⁿ**)₂, and wherein each **Rⁿ** is independently selected from the group comprising hydrogen, C₁₋₁₈alkyl, C₂₋₁₈alkenyl, C₂₋₁₈alkynyl, C₆₋₁₂aryl, and C₆₋₁₂arylC₁₋₁₈alkyl; and
         wherein **t1**, **t2** and **t3** are each independently an integer selected from 0 to 18;
         wherein Z² is selected from the group consisting of N, S, P and O;
         wherein **R^{k}** and **R^{l}** are each independently selected from the group comprising C₁₋₁₈alkyl, C₂-₁₈alkenyl, C₂-₁₈alkynyl, C₆₋₁₂aryl, and C₆₋₁₂arylC₁₋₁₈alkyl;
         wherein each **R^{m}** is independently selected from the group comprising hydrogen, C₁₋₁₈alkyl, C₂-₁₈alkenyl, C₂-₁₈alkynyl, C₆₋₁₂aryl, and C₆₋₁₂arylC₁₋₁₈alkyl; and
   b) optionally one or more cyclic esters, stereoisomers, racemics, or mixtures thereof, wherein said cyclic ester is different from said second compound.
2. The process according to statement 1, wherein said lactide monomer is selected from the group consisting of L-lactide, D-lactide, meso-lactide, racemic lactide and any mixtures thereof.
3. The process according to statement 1 or 2, wherein said beta-lactone is a compound of formula (**Ia**), stereoisomers, racemics or mixtures thereof; 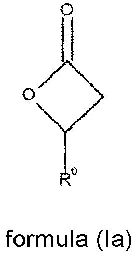
   wherein **R^{b}** is hydrogen or is selected from the group comprising C₂-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₛ₁-Z¹-**R^{g}**, -(CH₂)ₛ₂-C(=O)O**R^{h}**, and -(CH₂)ₛ₃-N(**Rⁱ**)₂, wherein each group can be unsubstituted or substituted with one or more substituents each independently selected from the group comprising halogen, C₁₋₁₈alkyloxy, and -N(**R^{j}**)₂, and wherein each **R^{j}** is independently selected from the group comprising hydrogen, C₁₋₁₈alkyl, C₂₋₁₈alkenyl, C₂₋₁₈alkynyl, C₆₋₁₂aryl, and C₆₋₁₂arylC₁₋₁₈alkyl;
   wherein **s1**, **s2** and **s3** are each independently an integer selected from 0 to 18; and preferably from 0 to 12, and more preferably from 0 to 10, and most preferably selected from 0, 1, 2, 3, 4, 5, or 6; wherein **Z¹** is selected from the group consisting of N, S, P and O; preferably selected from N, S or O; more is preferably O,
   wherein **R^{g}** and **R^{h}** are each independently selected from the group comprising C₁₋₁₈alkyl, C₂-₁₈alkenyl, C₂-₁₈alkynyl, C₆₋₁₂aryl, and C₆₋₁₂arylC₁₋₁₈alkyl;
   wherein each **Rⁱ** is independently selected from the group comprising hydrogen, C₁₋₁₈alkyl, C₂-₁₈alkenyl, C₂-₁₈alkynyl, C₆₋₁₂aryl, and C₆₋₁₂arylC₁₋₁₈alkyl; and
4. The process according to any one of statements 1 to 3, wherein said beta-lactone is a compound of formula (**Ia**), stereoisomers, racemics or mixtures thereof; wherein **R^{b}** is selected from the group comprising C₂₋₁₀alkyl, heteroC₁₋₁₀alkyl, heteroC₂₋₁₀alkenyl, - (CH₂)ₛ₁-Z¹-**R^{g}**, -(CH₂)ₛ₂-C(=O)O**R^{h}**, and -(CH₂)ₛ₃-N(**Rⁱ**)₂, and wherein each group is unsubstituted or substituted with one or more halogen; wherein **s1** is selected from 0, 1, 2 or 3; wherein **s2** is selected from 0, 1, 2 or 3, wherein **s3** is selected from 0, 1, 2 or 3, wherein Z¹ is selected from the group consisting of N, S, P and O; preferably selected from N, S or O; more preferably is O; wherein **R^{g}** and **R^{h}** are each independently selected from the group comprising C₁-₁₈alkyl, C₆₋₁₂aryl, and C₆₋₁₂arylC₁₋₁₈alkyl, and preferably are selected from the group comprising methyl, ethyl, *t*bu, allyl, phenyl, and benzyl; and wherein each **Rⁱ** is independently selected from the group comprising hydrogen and C₁₋₁₈alkyl.
5. The process according to any one of statements 1 to 4, wherein said beta-lactone is a compound of formula (**Ia**), stereoisomers, racemics or mixtures thereof; wherein **R^{b}** is selected from the group comprising ethyl, n-butyl, sec-butyl, isobutyl, *t*bu, isopropyl, - CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.
6. The process according to any one of statements 1 to 5, wherein said diolide is a compound of formula (**IIa**), stereoisomers, racemics or mixtures thereof; 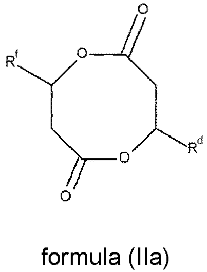
   wherein each of **R^{d}** and **R^{f}** is independently hydrogen or is selected from the group comprising C₁-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₜ₁-Z²-**R^{k}**, -(CH₂)ₜ₂-C(=O)O**R^{l}**, and -(CH₂₎ₜ₃-N(R^{m})₂, wherein each group can be unsubstituted or substituted with one or more substituents each independently selected from the group comprising halogen, C₁₋₁₈alkyloxy, and -N(**Rⁿ**)₂, and wherein each **Rⁿ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
   wherein **t1**, **t2** and **t3** are each independently an integer selected from 0 to 18; and preferably from 0 to 12, and more preferably from 0 to 10, and most preferably selected from 0, 1, 2, 3, 4, 5, or 6;
   wherein **Z²** is selected from the group consisting of N, S, P and O; preferably selected from N, S or O; more preferably is O;
   wherein **R^{k}** and **R^{l}** are each independently selected from the group comprising C₁₋₁₈alkyl, C₂₋₁₈alkenyl, C₂₋₁₈alkynyl, C₆₋₁₂aryl, and C₆₋₁₂arylC₁₋₁₈alkyl; and
   wherein each **R^{m}** is independently selected from the group comprising hydrogen, C₁₋₁₈alkyl, C₂₋₁₈alkenyl, C₂₋₁₈alkynyl, C₆₋₁₂aryl, and C₆₋₁₂arylC₁₋₁₈alkyl.
7. The process according to any one of statements 1 to 6, wherein said diolide is a compound of formula (**IIa**), stereoisomers, racemics or mixtures thereof; wherein **R^{d}** and **R^{f}** are each independently selected from the group comprising C₁₋₁₀alkyl, heteroC₁₋₁₀alkyl, heteroC₂₋₁₀alkenyl, -(CH₂)ₜ₁-Z²-**R^{k}**, -(CH₂)ₜ₂-C(=O)O**R^{l}**, and -(CH₂)ₜ₃-N(**R^{m}**)₂, and wherein each group is unsubstituted or substituted with one or more halogen; wherein **t1** is selected from 0, 1, 2 or 3; wherein **t2** is selected from 0, 1, 2 or 3, wherein **t3** is selected from 0, 1, 2 or 3, wherein Z² is selected from the group consisting of N, S, P and O; preferably selected from N, S or O; more preferably is O; wherein **R^{k}** and **R^{l}** are each independently selected from the group comprising C₁-₁₈alkyl, C₆₋₁₂aryl, and C₆₋₁₂arylC₁₋₁₈alkyl, and preferably are selected from the group comprising methyl, ethyl, *t*bu, allyl, phenyl, and benzyl; and wherein each **R^{m}** is independently selected from the group comprising hydrogen and C₁₋₁₈alkyl.
8. The process according to any one of statements 1 to 7, wherein said diolide is a compound of formula (**IIa**), stereoisomers, racemics or mixtures thereof; wherein R^{d} and R^{f} are each independently selected from the group comprising methyl, ethyl, n-butyl, sec-butyl, isobutyl, *t*bu, isopropyl, -CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.
9. The process according to any one of statements 1 to 8, wherein said cyclic ester is selected from the group comprising gamma-lactones, delta-lactones, epsilon-lactones, and glycolides, wherein each group can be unsubstituted or substituted with one or more substituents each independently selected from the group comprising C₁₋₆alkyl, C₁₋₆alkoxy, -NH₂, mono(C₁₋₆alkyl)amino, di(C₁₋₆alkyl)amino,C₁₋₆alkyloxyC₁₋₆alkyl and C₁₋₆alkyloxycarbonyl.
10. The process according to any one of statements 1 to 9, wherein said cyclic ester is selected from the group comprising glycolide, δ-valerolactone, γ-butyrolactone, γ-valerolactone, 4-methyldihydro-2(3H)-furanone, alpha-methyl-gamma-butyrolactone, ε-caprolactone, and any mixtures thereof, wherein each group can be unsubstituted or substituted with one or more substituents each independently selected from C₁₋₆alkyl or C₁₋₆alkoxy, preferably wherein said cyclic ester is selected from the group comprising glycolide, δ-valerolactone, γ-butyrolactone, γ-valerolactone, alpha-methyl-gamma-butyrolactone, and ε-caprolactone, and any mixtures thereof.
11. The process according to any one of statements 1 to 10, wherein the catalyst is an organometallic catalyst of formula (III) or (IV), 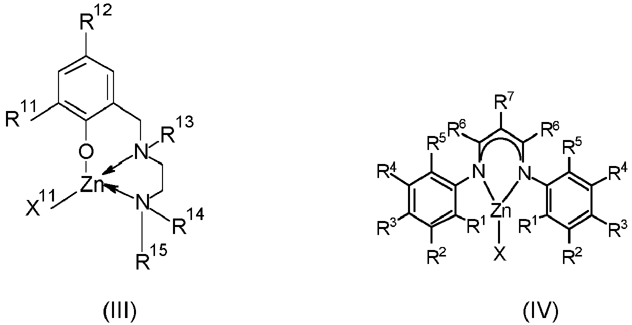 wherein
   **R¹**, **R²**, **R³**, **R⁴**, **R⁵**, **R⁶**, and **R⁷** are each independently selected from the group consisting of hydrogen, optionally substituted C₁₋₁₂alkyl, and an inert functional group, and wherein two or more of said groups can be linked together to form one or more rings;
   **X** is selected from the group comprising -N(Si**R²⁷**₃)₂, C₁₋₁₂alkyl, C₁₋₁₂alkoxy, -N**R⁹R¹⁰** and -BH₄;
   each **R²⁷** is independently selected from hydrogen or C₁₋₆alkyl;
   each **R⁹** and **R¹⁰** is independently selected from hydrogen or C₁₋₆alkyl;
   **R¹¹** and **R¹²** are each independently selected from the group consisting of C₁₋₁₀alkyl; C₁₋₁₀alkoxy, NO₂, and halogen;
   **R¹³**, **R¹⁴**, and **R¹⁵** are each independently C₁₋₁₀alkyl, or **R¹³** and **R¹⁴** are covalently bound to each other and are each a methylene and **R¹⁵** is C₁₋₁₀alkyl;
   **X¹¹** is selected from C₁₋₁₀alkyl, -O**R¹⁶** or -N(Si**R¹⁷**₃)₂;
   **R¹⁶** is C₁₋₁₀alkyl;and
   each **R¹⁷** is independently selected from hydrogen or C₁₋₆alkyl;
   preferably the catalyst is selected from the group comprising [(NNO)ZnEt], [BDI]Zn(N(SiMe₃)₂), [BDI]Zn(Et), and {[BDI]Zn(O**R³⁰**)}₂, wherein **R³⁰** is C₁₋₆alkyl; preferably the catalyst is [BDI]Zn(N(SiMe₃)₂) or [(NNO)ZnEt]. 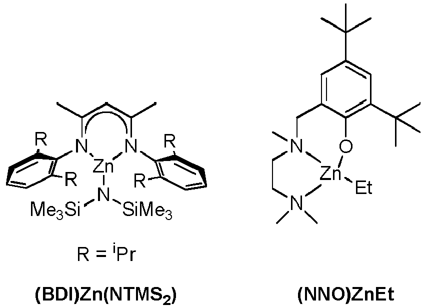
12. The process according to any one of statements 1 to 10, wherein the catalyst is selected from the group of complexes of formulae M(OSO₂CF₃)ₘ, M(N(OSO₂CF₃)₂)ₘ, M(**R²³**C(O)C**R²³**₂C(O)**R²³**)ₘ, and (**R²⁴**CO₂)ₘM, wherein **M** is a metal of Group 2, 3, including the lanthanide series, or Group 12, 13, 15, wherein each **R²³** is independently an optionally substituted C₁₋₁₂alkyl, wherein each **R²⁴** is independently a perfluorinated C₁₋₁₂alkyl or an aryl, and wherein **m** is the valence of M.
13. The process according to any one of statements 1 to 10, wherein the catalyst is selected from the group comprising dimeric phosphazene bases, or amines or guanidines, organic acids, sparteine, thiourea-amino derivaties, N-heterocyclic carbenes, 4-(dialkylamino)pyridines, amidines, phosphorus based phospines, phosphazenium derivatives and phosphazenes, metal amides; and compounds of general formula **M¹(Y¹,Y², ...Y^{p})_{q},** in which **M¹** is a metal selected from the group comprising the elements of columns 3 to 12 of the periodic table of the elements, and the elements Al, Ga, In, Tl, Ge, Sn, Pb, Sb, Ca, Mg and Bi; whereas **Y¹**, **Y²**, ... Y**^{p}** are each substituents selected from the group comprising C₁₋₂₀alkyl, C₆₋₃₀aryl, C₁₋₂₀alkoxy, C₆₋₃₀aryloxy, oxide, carboxylate, and halide groups, and **p** and **q** are integers of from 1 to 6;
   preferably the catalyst is selected from the group comprising 1,5,7-triazobicyclo-[4,4,0]dec-5-ene (TBD), 1,8-diazabicyclo[5.4.0]undec-7-ene (DBU), 4-dimethylaminopyridine (DMAP), *tert*-butylimino-1,3-dimethylperhydro-1,3,2-diazaphosphine (BEMP); Sn(Oct)₂, Al(OiPr)₃, Ti(OiPr)₄, Ti(2-ethylhexanoate)₄, Ti(2-ethylhexyloxide)₄, Zr(OiPr)₄, Bi(neodecanoate)₃, (2,4-di-tert-butyl-6-(((2-(dimethylamino)ethyl)(methyl)amino)methyl)phenoxy)(ethoxy)zinc, and Zn(lactate)₂.
14. The process according to any one of statements 1 to 10, wherein the catalyst is selected from the group comprising the following rare-earth complexes:
   M^{1a}L^{1a}, M^{1a}(L^{2a})₃, M^{1a}L^{3a}, M^{1a}L^{4a}, M^{1a}L^{1a}L^{2a}, M^{1a}L^{1a}L^{3a}, M^{1a}L^{2a}L^{3a}, M^{1a}L^{2a}L^{4a}, M^{1a}L^{3a}L^{4a}, M^{1a}L^{2a}L^{5a}, M^{1a}L^{1a}L^{2a}(donor)ₙ, M^{1a}L^{2a}L^{4a}(donor)ₙ, M^{1a}L^{2a}L^{5a}(donor)ₙ, [(donor)ₙM^{1a}L^{1a}(O**R^{3d}**-)]₂, [(donor)ₙM^{1a}L^{4a}(O**R^{3d}**-)]₂ , halide or hydride complexes thereof (such as chloride or borohydride), homoleptic and dimeric forms thereof;
   **M^{1a}** is rare earth metal selected from the group comprising Y, La, Sm, Tb, Lu, Nd, Yb, Sc, Er, Pr, Gd, Ho, and Eu,
   the donor can be selected from THF, DME, or pyridine,
   n is selected from 0, 1, or 2,
   **L^{2a}** is selected from the group comprising -N**R^{3b}**₂, -CH₂-(Si**R^{3a}**Me₂)₂, -CH(SiMe₃)₂, - N(Si**R^{3a}**Me₂)₂, C₁₋₆alkyl, di(C₁-₆alkyl)aminoC₁₋₆alkylC₆₋₁₀aryl, di(C₁₋₆alkyl)aminoC₆₋₁₀arylC₁₋₆alkyl, C₆₋₁₀aryl, -O**R^{3c}**, -S**R^{3c}**; and -PFe; for example suitable L^{2a} can be selected from the group comprising -N(SiMe₃)₂, -N(SiHMe₂)₂, -NPh₂, -CH₂SiMe₃, -CH(SiMe₃)₂, -CH₃, - C₆H₄CH₂NMe₂, -CH₂(2-NMe₂)C₆H₄, -C₆H₅, -O*i*Pr, 2,6-*t*Bu₂C₆H₃O-, 4-MeC₆H₄O-, 4-MeOC₆H₄O-, CF₃CH₂O-, PhCH₂O-, 4-MeC₆H₄S-, 2,6-*t*Pr₂C₆H₃O-, -OPh, -OtBu, -OTf, and -PF₆,
   wherein **R^{3a}** is selected from H or Me, **R^{3b}** is C₆₋₁₀aryl, **R^{3c}** is selected from the group comprising C₁₋₆alkyl, C₆₋₁₀aryl, C₁-₆alkylC₆₋₁₀aryl, C₁₋₆alkyloxyC₆₋₁₀aryl, haloC₁₋₆alkyl, and C₆₋₁₀arylC₁₋₆alkyl,
   **R^{3d}** is selected from C₆₋₁₀aryl, or C₁₋₆alkylC₆₋₁₀arylC₁₋₆alkyl,
   **L^{1a}** is a tetradentate ligand of formula 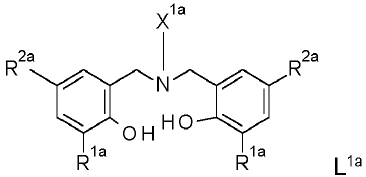
   wherein
   **R^{1a}** and **R^{2a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable R^{1a} and R^{2a} can be each independently selected from the group comprising -CI, -F, -Br, - Me, -Et, -tBu, adamantly, -CMe₂Ph, -CPh₃, -CMe₂*t*Bu, and -CMe₂(*p*-CF₃Ph), and
   **X^{1a}** is selected from the group comprising C₁₋₆alkyoxyC₁₋₆alkyl, di(C₁₋₆alkyl)aminoC₁₋₆alkyl; di(C₁₋₆alkyl)amino,heteroarylC₁₋₆alkyl, and heterocyclylC₁₋₆alkyl, for example suitable **X^{1a}** can be selected from the group comprising -(CH₂)₂OMe, -(CH₂)₂NMe₂, -(CH₂)₃NMe₂, - (CH₂)₂NEt₂, -CH₂(2-pyridyl), -(CH₂)₂(2-THF), -NMe₂, -(CH₂)₂*N*Benzoxazine, and -CH₂(2-furyl); wherein each of said groups can be unsubstituted or substituted with one or more C₁₋₆alkyl substituents,
   **L^{3a}** is a ligand of formula 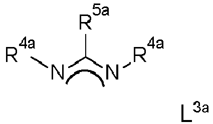
   wherein **R^{4a}** is selected from the group comprising C₆₋₁₀aryl, C₁₋₆alkyl, diC₁₋₆alkylamino, C₁₋₆alkylC₆₋₁₀aryl, C₁₋₆alkyloxyC₆₋₁₀aryl, C₆₋₁₀arylC₁₋₆alkyl, and diC₁₋₆alkylaminoC₁₋₆alkylC₆₋₁₀aryl, or two **R^{4a}** together can form a C₁₋₆alkylene; and
   wherein **R^{5a}** is selected from C₆₋₁₀aryl, -N(SiR^{3a}Me2)₂, or diC₁₋₆alkylamino, and
   L^{4a} is a tetradentate ligand of formula 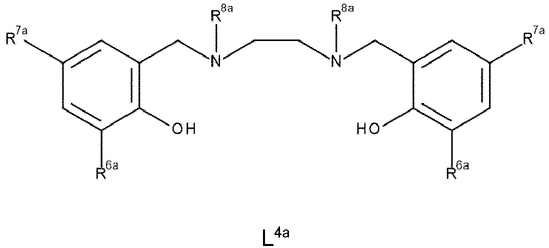
   wherein **R^{6a}** and **R^{7a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable **R^{6a}** and **R^{7a}** can be each independently selected from the group comprising -CI, - Me, -Et, -*t*Bu, adamantly, -CMe₂Ph, -CPh₃, -CMe₂*t*Bu, and -CMe₂(*p*-CF₃Ph), and
   wherein **R^{8a}** is selected from the group comprising C₁₋₁₀alkyl, C₃₋₁₀cycloalkyl, C₅₋₁₀aryl, and C₅₋₁₀arylC₁₋₁₀alkyl, and can for example be selected from the group comprising -Me, -Et, - tBu, cyclohexyl and phenyl, and
   L^{5a} is a tetradentate ligand of formula 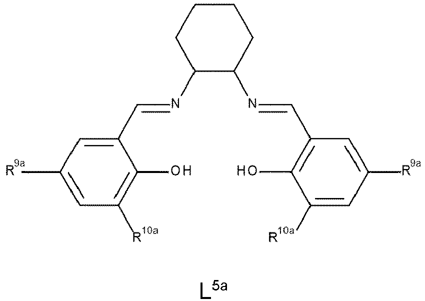
   wherein **R^{9a} and R^{10a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable R^{9a} and R^{10a} can be each independently selected from the group comprising -CI, -Me, -Et, -tBu, adamantly, -CMe₂Ph, -CPh₃, -CMe₂*t*Bu, and -CMe₂(*p*-CF₃Ph).
15. The process according to any one of statements 1 to 10, wherein the **catalyst** is a complex of general formula **M^{2a}L^{6a}L^{7a}**, in which
   **M^{2a}** is Zr or Hf,
   **L^{6a}** is selected from the group comprising C₁₋₁₂alkyl and -O**R^{3e}**; wherein **R^{3e}** is selected from the group comprising C₁₋₆alkyl, C₁-₆alkylC₆₋₁₀aryl, C₆₋₁₀arylC₁₋₆alkyl, C₁₋₆ alkyloxyC₆₋₁₀aryl, and C₁₋₆alkyloxycarbonylC₁₋₆alkyl, and
   L^{7a} is a ligand of formula 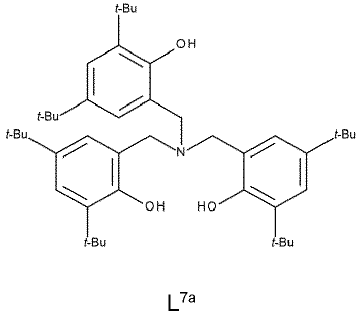
16. The process according to any one of statements 1 to 15, wherein the process is performed in the presence of at least one initiator of formula (V), 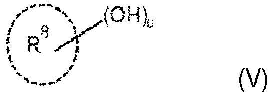 wherein **R⁸** is selected from the group comprising C₁₋₂₀alkyl, C₆₋₃₀aryl, and C₆₋₃₀arylC₁₋₂₀alkyl optionally substituted by one or more substituents Z³, wherein each Z³ is independently selected from the group comprising halogen, hydroxyl, C₁₋₆alkyl, C₁₋₆alkoxy, mono- or di-alkylamino, C₁₋₆alkyloxyC₁₋₆alkyl (-COR), C₁₋₆alkylcarbonyl (-CO₂R), thioC₁₋₆alkyl (-SR), -SO₂- C₁₋₆alkyl, -CON(R^{z1})₂, and N(R^{z2})COR^{z3}, wherein R^{z1}, R^{z2} and R^{z3} are each independently selected from the group consisting of hydrogen, C₁₋₆alkyl, C₆₋₁₀aryl, and C₁-₆alkylC₆₋₁₀aryl, and
   wherein u is an integer selected from the group consisting of the integers from 1 to 10; preferably from 1 to 5, more preferably u is an integer selected from 1, 2 or 3.
17. The process according to any one of statements 1 to 16, wherein said process is carried out at a temperature comprised between -60°C and 150°C, preferably between 0°C and 100°C, more preferably between 20°C and 80°C.
18. The process according to any one of statements 1 to 17, wherein the process is performed in the presence or absence (in bulk) of solvent, wherein when present said solvent is an aprotic polar solvent or an aprotic apolar solvent.
19. The process according to any one of statements 1 to 18, wherein said process comprises a simultaneous copolymerisation of said lactide monomer and/or polylactic acid with said second compound and said one or more optional cyclic esters.
20. The process according to any one of statements 1 to 19, wherein said copolymerisation of said lactide monomer and/or polylactic acid with at least one second compound is carried out in two or more sequential steps.
21. The process according to any one of statements 1 to 20, wherein the molar ratio of initiator to catalyst is comprised between 1 and 1000, preferably between 1 and 100, and more preferably between 1 and 10.
22. The process according to any one of statements 1 to 21, wherein the molar ratio of lactide monomer and/or polylactic acid to catalyst is equal to or lower than 1050, or between 10 and 1050, or between 10 and 700.
23. The process according to any one of statements 1 to 22, wherein the molar ratio of beta-lactone to catalyst is equal to or lower than 1500, and for instance comprised between 10 and 1500, or between 10 and 1000.
24. The process according to any one of statements 1 to 23, wherein the molar ratio of lactide monomer and/or polylactic acid to beta-lactone is equal to or lower than 1050, and for instance equal to or lower than 700.
25. The process according to any one of statements 1 to 24, wherein the molar ratio of diolide to catalyst is equal to or lower than 750, and for instance comprised between 10 and 750, or between 10 and 500.
26. The process according to any one of statements 1 to 25, wherein the molar ratio of lactide monomer and/or polylactic acid to diolide is equal to or lower than 1050, and for instance equal to or lower than 700.
27. A lactide copolymer obtained or obtainable by a process according to any one of statements 1 to 26.
28. An article comprising a lactide copolymer according to statements 27 or a lactide copolymer prepared according to the process according to any one of statements 1 to 26.

### General

The present invention provides a process for the production of lactide copolymers by the copolymerisation of lactide monomer and/or polylactic acid with at least one second compound, wherein said second compound is selected from the group comprising, and preferably consisting of beta-lactone and/or diolide as defined herein, wherein copolymerisation is carried out in the presence of at least one catalyst and optionally at least one initiator. Optionally, one or more additional cyclic esters as defined herein (i.e. different from the second compound), may also be applied in a process of the invention for the production of lactide copolymers.

The terms "polylactide", "PLA", "polylactic acid" and "poly(lactic acid)" are used herein as synonyms.

The terms "lactide monomer" and "lactide" are also used herein as synonyms.

It is noted that lactide can exist in three different geometric structures, which have a diastereomeric relationship. Lactide as used in a process of the invention may be L-lactide (derived from two L-lactic acid molecules), D-lactide (derived from two D-lactic acid molecules), meso-lactide (derived from an L-lactic acid molecule and a D-lactic acid molecule), or a mixture of two or more of the above. A 50/50 mixture of L-lactide and D-lactide with a melting point of about 126°C is often referred to in the literature as D,L-lactide or racemic lactide (and is also denoted as "rac-Lactide" or "racemic lactide" or "rac-lactide" herein). In certain embodiment, said racemic lactide may also be applied in the present process. Mixtures of the aforementioned lactides are also suitable for use in the process.

In some embodiments of the present process, lactide monomer is copolymerized with at least one second compound (a second monomer) as defined herein. Preferably said lactide monomer is selected from the group consisting of L-lactide, D-lactide, meso-lactide, racemic lactide and any mixtures thereof.

In some embodiments of the present process, the lactide used in the present process is a lactide, e.g. a L-lactide or a D-lactide, that has less than 10 % by weight of other lactides. For example, the lactide used in the present process may be L-lactide containing less than 10% or less than 5% by weight of D-lactide. In another example the lactide used in the present process may be D-lactide containing less than 10% or less than 5% by weight of L-lactide.

In certain embodiments of the present process, lactide monomer used in the present process is L-lactide. In certain embodiments, the lactide is substantially pure L-lactide, where the wording "substantially pure" means that it may contain less than 5 % by weight, or less than 1 % by weight of other lactides.

In certain embodiments of the present process, lactide monomer used in the present process is D-lactide. In certain embodiments, the lactide is substantially pure D-lactide, where the wording "substantially pure" means that it may contain less than 5 % by weight, or less than 1 % by weight of other lactides.

In some embodiments of the present process, lactide used in the present process is D,L-lactide.

In certain embodiments of the present process polylactic acid is copolymerized with a least one second compound (a second monomer) as defined herein. Polylactic acid ("PLA") as used herein refers to a polymer of lactic acid molecules. It is a thermoplastic polyester with backbone formula [-C(CH₃)HC(=O)-O-]ₙ and having the following structural formula

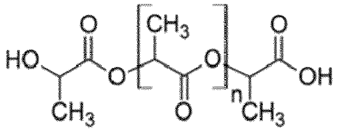

It is clear from the above formula that the term polylactic acid or PLA as used herein also intends to include **oligomers** of lactid acid, i.e. having a limited number of repeating units. For instance, the term PLA may include oligomers of lactid acid having a number of repeating unit (n) comprised between 2 and 300 or between 2 and 150. In certain embodiments, said PLA may have a molar mass (Mₙ) comprised between 1 and 20 kDa .

Preferably, said PLA is selected from the group comprising, and preferably consisting of, poly(L-lactic acid) (PLLA), poly(D-lactic acid) (PDLA), and poly(L-,D-lactic acid) (PLDLA), and any mixture thereof. By "PLLA" or "poly(L-lactic acid)" is meant a polylactic acid in which at least 90wt%, such as at least 95wt% of the repetitive units are L-lactic acid monomers. By "PDLA" or "poly(D-lactic acid)" is meant a polylactic acid in which at least 90wt%, such as at least 95wt% of the repetitive units are D-lactic acid monomers. Preferably, PLLA or PDLA have an optical purity (called isomeric purity) of the L or D isomer, respectively, which is equal to or higher than 90 wt% of the PLA, preferably higher than 95 wt% or higher than 97.5 wt%. An optical purity from at least 99 wt% is even more preferred. A PLLA used in the invention thus includes a content of D isomer lower than 10wt%, preferably lower than 5 wt%, preferably lower than 2.5 wt%, more preferably lower or equal to 1 wt% of the PLLA. By analogy, a PDLA used in the invention includes a content of L isomer lower than 10wt%, preferably lower than 5 wt%, preferably lower than 2.5 wt%, more preferably lower or equal to 1 wt% of the PDLA.

In a first aspect, the present invention provides a process for the preparation of a lactide copolymer comprising the step of copolymerizing lactide monomer and/or polylactic acid in the presence of at least one catalyst and optionally at least one initiator with
**a)** at least one second compound, wherein said second compound comprises
   **a1)** at least one beta-lactone of formula (I), stereoisomers, racemics or mixtures thereof; 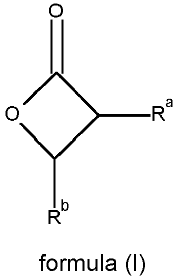
      wherein each of **R^{a}** and **R^{b}** is independently hydrogen or is selected from the group comprising, C₂-₁₈alkyl, C₂-₁₈alkenyl, C₂-₁₈alkynyl, C₆₋₁₂aryl, C₆₋₁₂arylC₁₋₁₈alkyl, heteroC1-₁₈alkyl, heteroC₂₋₁₈alkenyl, -(CH₂)ₛ₁-Z¹-**R^{g}**, -(CH₂)ₛ₂-C(=O)O**R^{h}**, and -(CH₂)ₛ₃-N(**Rⁱ**)₂, wherein each group can be unsubstituted or substituted with one or more substituents each independently selected from the group comprising halogen, C₁₋₁₈alkyloxy, and - N(**R^{j}**)₂, and wherein each **R^{j}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
      wherein **s1, s2** and **s3** are each independently an integer selected from 0 to 18;
      wherein **Z¹** is selected from the group consisting of N, S, P and O;
      wherein **R^{g}** and **R^{h}** are each independently selected from the group comprising C₁₋₁₈alkyl, C₂-₁₈alkenyl, C₂-₁₈alkynyl, C₆₋₁₂aryl, and C₆₋₁₂arylC₁₋₁₈alkyl;
      wherein each **Rⁱ** is independently selected from the group comprising hydrogen, C₁₋₁₈alkyl, C₂-₁₈alkenyl, C₂-₁₈alkynyl, C₆₋₁₂aryl, and C₆₋₁₂arylC₁₋₁₈alkyl; and
      and/or
   **a2**) at least one diolide of formula (II), stereoisomers, racemics or mixtures thereof 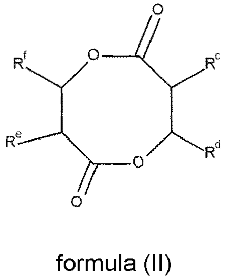
      wherein each of **R^{c}, R^{d}, R^{e} and R^{f}** is independently hydrogen or is selected from the group comprising C₁-₁₈alkyl, C₂-₁₈alkenyl, C₂₋₁₈alkynyl, C₆₋₁₂aryl, C₆₋₁₂arylC₁₋₁₈alkyl, heteroC₁₋₁₈alkyl, heteroC₂₋₁₈alkenyl -(CH₂)ₜ₁-Z²-**R^{k}**, -(CH₂)ₜ₂-C(=O)O**R^{l}**, and -(CH₂)ₜ₃-N(**R^{m}**)₂, wherein each group can be unsubstituted or substituted with one or more substituents each independently selected from the group comprising halogen, C₁₋₁₈alkyloxy, and -N(**Rⁿ**)₂, and wherein each **Rⁿ** is independently selected from the group comprising hydrogen, C₁₋₁₈alkyl, C₂₋₁₈alkenyl, C₂₋₁₈alkynyl, C₆₋₁₂aryl, and C₆₋₁₂arylC₁₋₁₈alkyl; and
      wherein **t1**, **t2** and **t3** are each independently an integer selected from 0 to 18;
      wherein **Z²** is selected from the group consisting of N, S, P and O;
      wherein **R^{k}** and **R^{l}** are each independently selected from the group comprising C₁₋₁₈alkyl, C₂-₁₈alkenyl, C₂-₁₈alkynyl, C₆₋₁₂aryl, and C₆₋₁₂arylC₁₋₁₈alkyl;
      wherein each **R^{m}** is independently selected from the group comprising hydrogen, C₁₋₁₈alkyl, C₂-₁₈alkenyl, C₂-₁₈alkynyl, C₆₋₁₂aryl, and C₆₋₁₂arylC₁₋₁₈alkyl; and
**b)** optionally one or more cyclic esters, stereoisomers, racemics, or mixtures thereof, wherein said cyclic ester is different from said second compound; and preferably wherein said cyclic ester is selected from the group comprising gamma-lactones, delta-lactones, epsilon-lactones, and glycolides, wherein each group can be unsubstituted or substituted with one or more substituents each independently selected from the group comprising C₁₋₆alkyl, C₁₋₆alkoxy, -NH₂, mono(C₁₋₆alkyl)amino, di(C₁₋₆alkyl)amino, C₁₋₆alkyloxyC₁₋₆alkyl and C₁₋₆alkyloxycarbonyl.

Thus, the present invention provides a process for preparing lactide copolymers comprising the step of copolymerizing lactide monomer and/or polylactic acid as defined herein with a) one or more second compounds in the presence of at least one catalyst and optionally at least one initiator, wherein said second compound is at least one beta-lactone as defined herein and/or at least one diolide as defined herein, and b) optionally one or more cyclic esters as defined herein.

In certain embodiments, the present invention provides a process for preparing lactide copolymers comprising the step of copolymerizing lactide monomer and/or polylactic acid as defined herein with a) one or more second compounds in the presence of at least one catalyst and optionally at least one initiator, wherein said second compound comprise at least one beta-lactone as defined herein and b) optionally one or more cyclic esters as defined herein.

In certain embodiments, the present invention provides a process for preparing lactide copolymers comprising the step of copolymerizing lactide monomer and/or polylactic acid as defined herein with a) one or more second compounds in the presence of at least one catalyst and optionally at least one initiator, wherein said second compound is a diolide as defined herein, and b) optionally one or more cyclic esters as defined herein.

In certain embodiments, the present invention provides a process for preparing lactide copolymers comprising the step of copolymerizing lactide monomer and/or polylactic acid with
a) two or more second compounds in the presence of at least one catalyst and optionally at least one initiator, wherein at least one of said second compounds is a beta-lactone as defined herein and wherein at least one of said second compounds is a diolide as defined herein, and
b) optionally one or more cyclic esters as defined herein.

In certain embodiments of the invention copolymerization of lactide monomer and/or polylactic acid with at least one second compound as defined herein in the presence of at least one catalyst as defined herein, and optionally at least one initiator at defined herein, may be carried out in the present of one or more further monomers, in particular one or more cyclic esters as defined herein, i.e. which are different from a second compound as defined herein. Non limiting examples of such further monomers include for instance glycolide, δ-valerolactone, γ-butyrolactone, γ-valerolactone, alpha-methyl-gamma-butyrolactone, and ε-caprolactone. By co-polymerising such additional cyclic ester monomers together with lactide monomer and/or polylactic acid and a second compound as given herein, valuable, and tailored co-polymers for different applications can in this way be manufactured.

### Beta-lactone

In accordance with the present process, the second compound comprises at least one, such as one or more beta-lactones of formula (I), stereoisomers, racemics or mixtures thereof. 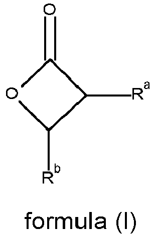
wherein each of **R^{a}** and **R^{b}** is independently hydrogen or is selected from the group comprising, C₂-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂-₁₈alkenyl, -(CH₂)ₛ₁-Z¹-**R^{g}**, -(CH₂)_{S2}-C(=O)O**R^{h}**, and -(CH₂)ₛ₃-N(**Rⁱ**)₂, wherein each group can be unsubstituted or substituted with one or more substituents each independently selected from the group comprising halogen, C₁₋₁₈alkyloxy, and -N(**R^{j}**)₂, and wherein each **R^{j}** is independently selected from the group comprising hydrogen, C₁₋₁₈alkyl, C₂₋₁₈alkenyl, C₂-₁₈alkynyl, C₆₋₁₂aryl, and C₆₋₁₂arylC₁₋₁₈alkyl;
wherein **s1**, **s2** and **s3** are each independently an integer selected from 0 to 18;
wherein **Z¹** is selected from the group consisting of N, S, P and O;
wherein **R^{g}** and **R^{h}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl; and
wherein each **Rⁱ** is independently selected from the group comprising hydrogen, C₁₋₁₈alkyl, C₂-₁₈alkenyl, C₂-₁₈alkynyl, C₆₋₁₂aryl, and C₆₋₁₂arylC₁₋₁₈alkyl.

In certain embodiments of the present process, a beta-lactone of formula (I) can have the structural formula (Ia) or stereoisomers, racemics or mixtures thereof, or the structural formula (Ib) or stereoisomers, racemics or mixtures thereof; and preferably has the structural formula (Ia) or stereoisomers, racemics or mixtures thereof; 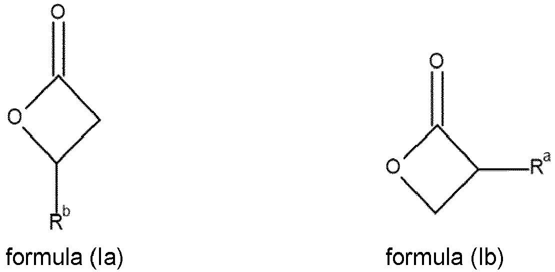
wherein each of **R^{a}** and **R^{b}** is independently hydrogen or is selected from the group comprising, C₂-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂-₁₈alkenyl, -(CH₂)ₛ₁-Z¹-**R^{g}**, -(CH₂)ₛ₂-C(=O)O**R^{H}**, and -(CH₂)ₛ₃-N(**Rⁱ**)₂,wherein each group can be unsubstituted or substituted with one or more substituents each independently selected from the group comprising halogen, C₁₋₁₈alkyloxy, and -N(**R^{j}**)₂, and wherein each **R^{j}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
wherein **s1**, **s2** and **s3** are each independently an integer selected from 0 to 18;
wherein **Z¹** is selected from the group consisting of N, S, P and O;
wherein **R^{g}** and **R^{h}** are each independently selected from the group comprising C₁₋₁₈alkyl, C₂-₁₈alkenyl, C₂-₁₈alkynyl, C₆₋₁₂aryl, and C₆₋₁₂arylC₁₋₁₈alkyl; and
wherein each **Rⁱ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl.

In certain preferred embodiments, a beta-lactone of formula (I) has structural formula (Ia) or stereoisomers, racemics or mixtures thereof; 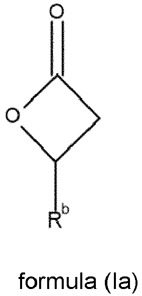
wherein **R^{b}** is hydrogen or is selected from the group comprising C₂-₁₈alkyl, C₂-₁₈alkenyl, C2-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₛ₁-Z¹-**R^{g}**, - (CH₂)ₛ₂-C(=O)O**R^{h}**, and -(CH₂)ₛ₃-N(**Rⁱ**)₂, wherein each group can be unsubstituted or substituted with one or more substituents each independently selected from the group comprising halogen, C₁₋₁₈alkyloxy, and -N(**R^{j}**)₂, and wherein each **R^{j}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
wherein **s1**, **s2** and **s3** are each independently an integer selected from 0 to 18; and preferably from 0 to 12, and more preferably from 0 to 10, and most preferably selected from 0, 1, 2, 3, 4, 5, or 6; wherein **Z¹** is selected from the group consisting of N, S, P and O; preferably selected from N, S or O; more preferably is O;
wherein **R^{g}** and **R^{h}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl;
wherein each **Rⁱ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;

In certain preferred embodiments, a beta-lactone of formula (I) has structural formula (Ia) or stereoisomers, racemics or mixtures thereof; wherein **R^{b}** is selected from the group comprising C₂-₁₀alkyl, heteroC₁₋₁₀alkyl, heteroC₂₋₁₀alkenyl, -(CH₂)ₛ₁-Z¹-**R^{g}**, -(CH₂)ₛ₂-C(=O)O**R^{h}**, and -(CH₂)ₛ₃-N(**Rⁱ**)₂, and wherein each group is unsubstituted or substituted with one or more halogen; wherein **s1** is selected from 0, 1, 2 or 3; wherein **s2** is selected from 0, 1, 2 or 3, wherein **s3** is selected from 0, 1, 2 or 3, wherein Z¹ is selected from the group consisting of N, S, P and O; preferably selected from N, S or O; more preferably is O; wherein **R^{g}** and **R^{h}** are each independently selected from the group comprising C₁-₁₈alkyl, C₆₋₁₂aryl, and C₆₋₁₂arylC₁₋₁₈alkyl, and preferably are selected from the group comprising methyl, ethyl, *t*bu, allyl, phenyl, and benzyl; and wherein each **Rⁱ** is independently selected from the group comprising hydrogen and C₁-₁₈alkyl.

In certain preferred embodiments, a process is provided, wherein said beta-lactone is a compound of formula (**Ia**), stereoisomers, racemics or mixtures thereof; wherein **R^{b}** is selected from the group comprising ethyl, n-butyl, sec-butyl, isobutyl, *t*bu, isopropyl, -CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.

In certain preferred embodiments, a beta-lactone of formula (I) has structural formula (Ib) or stereoisomers, racemics or mixtures thereof; 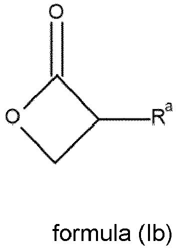
wherein R^{a} is hydrogen or is selected from the group comprising C₂-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₛ₁-Z¹-**R^{g}**, - (CH₂)ₛ₂-C(=O)O**R^{h}**, and -(CH₂)ₛ₃-N(**Rⁱ**)₂, wherein each group can be unsubstituted or substituted with one or more substituents each independently selected from the group comprising halogen, C₁₋₁₈alkyloxy, and -N(**R^{j}**)₂, and wherein each **R^{j}** is independently selected from the group comprising hydrogen, C₁-₁₈alkyl, C₂-₁₈alkenyl, C₂-₁₈alkynyl, C₆-₁₂aryl, and C₆₋₁₂arylC₁₋₁₈alkyl;
wherein **s1, s2** and **s3** are each independently an integer selected from 0 to 18; and preferably from 0 to 12, and more preferably from 0 to 10, and most preferably selected from 0, 1, 2, 3, 4, 5, or 6;
wherein **Z¹** is selected from the group consisting of N, S, P and O; preferably selected from N, S or O; more preferably is O;
wherein **R^{g}** and R**^{h} are** each independently selected from the group comprising C₁-₁₈alkyl, C₂-₁₈alkenyl, C₂-₁₈alkynyl, C₆-₁₂aryl, and C₆₋₁₂arylC₁₋₁₈alkyl;
wherein each **Rⁱ** is independently selected from the group comprising hydrogen, C₁-₁₈alkyl, C₂-₁₈alkenyl, C₂-₁₈alkynyl, C₆-₁₂aryl, and C₆₋₁₂arylC₁₋₁₈alkyl;

In certain preferred embodiments, a beta-lactone of formula (I) has structural formula **(Ib)** or stereoisomers, racemics or mixtures thereof; wherein **R^{a}** is selected from the group comprising C₂-₁₀alkyl, heteroC₁₋₁₀alkyl, heteroC₂₋₁₀alkenyl, -(CH₂)ₛ₁-Z¹-**R^{g}**, -(CH₂)ₛ₂-C(=O)O**R^{h}**, and -(CH₂)ₛ₃-N(**Rⁱ**)₂, and wherein each group is unsubstituted or substituted with one or more halogen; wherein **s1** is selected from 0, 1, 2 or 3; wherein **s2** is selected from 0, 1, 2 or 3, wherein **s3** is selected from 0, 1, 2 or 3, wherein **Z¹** is selected from the group consisting of N, S, P and O; preferably selected from N, S or O; more preferably is O; wherein **R^{g}** and **R^{h}** are each independently selected from the group comprising C₁-₁₈alkyl, C₆₋₁₂aryl, and C₆₋₁₂arylC₁₋₁₈alkyl, and preferably are selected from the group comprising methyl, ethyl, tbu, allyl, phenyl, and benzyl; and wherein each **Rⁱ** is independently selected from the group comprising hydrogen and C₁-₁₈alkyl.

In certain preferred embodiments, a process is provided, wherein said beta-lactone is a compound of formula **(Ib),** stereoisomers, racemics or mixtures thereof; wherein **R^{a}** is selected from the group comprising ethyl, n-butyl, sec-butyl, isobutyl, tbu, isopropyl, -CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.

In certain preferred embodiments, a beta-lactone of formula (I) having structural formula (la) or stereoisomers, racemics or mixtures thereof, and/or having structural formula (lb) or stereoisomers, racemics or mixtures thereof is applied in the present copolymerisation process, wherein each of **R^{a}** and **R^{b}** is independently selected from the group comprising C₂-₁₀alkyl, C₂-₁₀alkenyl, heteroC₁₋₁₀alkyl, heteroC₂₋₁₀alkenyl, -(CH₂)ₛ₁-**Z¹-R^{g}**, CH₂)ₛ₂-C(=O)O**R^{h}**, and -(CH₂)ₛ₃-N(**Rⁱ**)₂, and wherein each group is unsubstituted or substituted with one or more halogen, and wherein s1, s2, s3, Z¹, R^{g}, R^{h} and Rⁱ are as defined hereinabove.

In certain preferred embodiments, a beta-lactone of formula (I) having structural formula (Ia) or stereoisomers, racemics or mixtures thereof is applied in the present copolymerisation process, wherein **R^{b}** is selected from the group comprising C₂-₆alkyl, C₂-₆alkenyl, heteroC₁₋₆alkyl, heteroC₂₋₆alkenyl, -(CH₂)ₛ₁-O-**R^{g}**; --(CH₂)ₛ₂C-C(=O)O**R^{h}**, and -(CH₂)ₛ₃-N(**Rⁱ**)₂, and wherein each group is unsubstituted or substituted with one or more halogen, wherein s1, s2, s3 are each independently selected from 0, 1, 2 or 3, preferably from 0, 1 or 2, wherein **R^{g}** and **R^{h}** are each independently selected from the group comprising C₁-₁₈alkyl, C₆-₁₂aryl, and C₆₋₁₂arylC₁₋₁₈alkyl, and preferably are selected from the group comprising methyl, ethyl, tbu, allyl, phenyl, and benzyl; and wherein each **Rⁱ** is independently selected from the group comprising hydrogen, and C₁-₁₈alkyl.

In certain preferred embodiments, a beta-lactone of formula (I) having structural formula (Ib) or stereoisomers, racemics or mixtures thereof is applied in the present copolymerisation process, wherein **R^{a}** is selected from the group comprising C₂-₆alkyl, C₂-₆alkenyl, heteroC₁₋₆alkyl, heteroC₂₋₆alkenyl, -(CH₂)ₛ₁-O-**R^{g}**; -(CH₂)ₛ₂C-C(=O)O**R^{h}**, and -(CH₂)ₛ₃-N(**Rⁱ**)₂, and wherein each group is unsubstituted or substituted with one or more halogen, wherein s1, s2, s3 are each independently selected from 0, 1, 2 or 3, preferably from 0, 1 or 2, wherein **R^{g}** and **R^{h}** are each independently selected from the group comprising C₁-₁₈alkyl, C₆-₁₂aryl, and C₆₋₁₂arylC₁₋₁₈alkyl, and preferably are selected from the group comprising methyl, ethyl, tbu, allyl, phenyl, and benzyl; and wherein each **Rⁱ** is independently selected from the group comprising hydrogen, and C₁-₁₈alkyl.

In some embodiments, a beta-lactone applied in the present copolymerisation is a compound of formula (**Ia**), or stereoisomers, racemics or mixtures thereof, wherein **R^{b}** is C₂-₁₀alkyl, and preferably C₂-₈alkyl or C₂-₆alkyl, optionally substituted with one or more halogen, and more preferably is selected from ethyl, propyl or tbu.

In some embodiments, a beta-lactone applied in the present copolymerisation is a compound of formula **(Ia),** or stereoisomers, racemics or mixtures thereof, wherein **R^{b}** is -(CH₂)ₛ₁-O-**R^{g}**; wherein s1 is 1 or 2, and wherein **R^{g}** is selected from the group comprising C₁-₁₈alkyl, C₆₋₁₂aryl, and C₆₋₁₂arylC₁₋₁₈alkyl, wherein each group is unsubstituted or substituted with one or more halogen.

In some embodiments, a beta-lactone applied in the present copolymerisation is a compound of formula (la), or stereoisomers, racemics or mixtures thereof, wherein **R^{b}** is -C(=O)**OR^{h}**, wherein **R^{h}** is selected from the group comprising C₁-₁₈alkyl, C₆₋₁₂aryl, and C₆₋₁₂arylC₁₋₁₈alkyl, wherein each group is unsubstituted or substituted with one or more halogen.

In some embodiments, a beta-lactone applied in the present copolymerisation is a compound of formula (la), or stereoisomers, racemics or mixtures thereof, wherein R^{b} is -N(**Rⁱ**)₂, wherein each Rⁱ is selected from the group comprising hydrogen and C₁-₁₈alkyl.

In an example, a beta-lactone of formula (I) having structural formula **(Ia)** or stereoisomers, racemics or mixtures thereof is applied in the present copolymerisation process, wherein **R^{b}** is selected from the group comprising ethyl, n-butyl, sec-butyl, isobutyl, tbu, isopropyl, - CH₂C₄F₉, -C(=O)-O-allyl, (-C(=O)O-CHCH=CH₂), -C(=O)-O-benzyl; -CH₂OMe, -CH₂Oallyl, - CH₂OBenzyl, -NH₂ and NHMe.

In some embodiments, a beta-lactone applied in the present copolymerisation is a compound of formula **(Ib),** or stereoisomers, racemics or mixtures thereof, wherein **R^{a}** is C₂-₁₀alkyl, and preferably C₂-₈alkyl or C₂-₆alkyl, optionally substituted with one or more halogen, and more preferably is selected from ethyl, propyl or tbu.

In some embodiments, a beta-lactone applied in the present copolymerisation is a compound of formula **(Ib),** or stereoisomers, racemics or mixtures thereof, wherein **R^{a}** is -(CH₂)ₛ₁-O-R^{g}; wherein s1 is 1 or 2, and wherein **R^{g}** is selected from the group comprising C₁-₁₈alkyl, C₆₋₁₂aryl, and C₆₋₁₂arylC₁₋₁₈alkyl, wherein each group is unsubstituted or substituted with one or more halogen.

In some embodiments, a beta-lactone applied in the present copolymerisation is a compound of formula **(Ib),** or stereoisomers, racemics or mixtures thereof, wherein **R^{a}** is -C(=O)**OR^{h}**, wherein **R^{h}** is selected from the group comprising C₁-₁₈alkyl, C₆₋₁₂aryl, and C₆₋₁₂arylC₁₋₁₈alkyl, wherein each group is unsubstituted or substituted with one or more halogen.

In some embodiments, a beta-lactone applied in the present copolymerisation is a compound of formula **(Ib),** or stereoisomers, racemics or mixtures thereof, wherein R^{a} is -N(**Rⁱ**)₂, wherein each Rⁱ is selected from the group comprising hydrogen and C₁-₁₈alkyl.

In an example, a beta-lactone of formula (I) having structural formula **(Ib)** or stereoisomers, racemics or mixtures thereof is applied in the present copolymerisation process, wherein **R^{a}** is selected from the group comprising ethyl, n-butyl, sec-butyl, isobutyl, tbu, isopropyl, - CH₂C₄F₉, -C(=O)-O-allyl, (-C(=O)O-CHCH=CH₂), -C(=O)-O-benzyl; -CH₂OMe, -CH₂Oallyl, - CH₂OBenzyl, -NH₂ and NHMe.

### Diolide

In accordance with the present process, the second compound comprises at least one, such as one or more, **diolides** of formula (II), stereoisomers, racemics or mixtures thereof 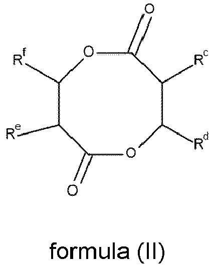
wherein each of **R^{c}, R^{d}, R^{e} and R^{f} is** independently hydrogen or is selected from the group comprising C₁-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl -(CH₂)ₜ₁-Z²-**R^{k}**, -(CH₂)ₜ₂-C(=O)O**R^{l}**, and -(CH₂)ₜ₃-N(**R^{m}**)₂, wherein each group can be unsubstituted or substituted with one or more substituents each independently selected from the group comprising halogen, C₁-₁₈alkyloxy, and -N(**Rⁿ**)₂, and wherein each **Rⁿ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and
wherein **t1, t2** and **t3** are each independently an integer selected from 0 to 18;
wherein **Z²** is selected from the group consisting of N, S, P and O; preferably selected from N, S or O; more preferably is O;
wherein **R^{k}** and **R^{l}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl; and
wherein each **R^{m}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl.

In certain embodiments of the present process, a diolide of formula (II) can have the structural formula (IIa) or stereoisomers, racemics or mixtures thereof, or the structural formula (IIb) or stereoisomers, racemics or mixtures thereof; and preferably has the structural formula (IIa) or stereoisomers, racemics or mixtures thereof; 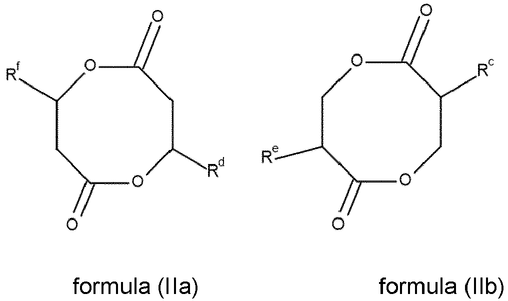
wherein each of **R^{c}, R^{d}, R^{e} and R^{f} is** independently hydrogen or is selected from the group comprising C₁-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl -(CH₂)ₜ₁-Z²-**R^{k}**, -(CH₂)ₜ₂-C(=O)OR^{l}, and -(CH₂)ₜ₃-N(**R^{m})**₂, wherein each group can be unsubstituted or substituted with one or more substituents each independently selected from the group comprising halogen, C₁-₁₈alkyloxy, and -N(**Rⁿ**)₂, and wherein each **Rⁿ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and
wherein **t1, t2** and **t3** are each independently an integer selected from 0 to 18;
wherein **Z²** is selected from the group consisting of N, S, P and O; preferably selected from N, S or O; more preferably is O;
wherein **R^{k}** and **R^{l}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl;
wherein each **R^{m}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and

In certain preferred embodiments of the present process, a diolide of formula (II) can have the structural formula (**IIa**) or stereoisomers, racemics or mixtures thereof, wherein each of **R^{d}** and **R^{f}** is independently hydrogen or is selected from the group comprising C₁-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₜ₁-**Z²-R^{k}**, - (CH₂)ₜ₂-C(=O)O**R^{l}**, and -(CH₂)ₜ₃-N(**R^{m}**)₂, wherein each group can be unsubstituted or substituted with one or more substituents each independently selected from the group comprising halogen, C₁-₁₈alkyloxy, and -N(**Rⁿ**)₂, and wherein each **Rⁿ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
wherein **t1, t2** and **t3** are each independently an integer selected from 0 to 18; and preferably from 0 to 12, and more preferably from 0 to 10, and most preferably selected from 0, 1, 2, 3, 4, 5, or 6;
wherein **Z²** is selected from the group consisting of N, S, P and O; preferably selected from N, S or O; more preferably is O;
wherein **R^{k}** and **R^{l}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl; and
wherein each **R^{m}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl.

In certain preferred embodiments of the present process, a diolide of formula (II) can have the structural formula (**IIa**) or stereoisomers, racemics or mixtures thereof, wherein **R^{d}** and **R^{f}** are each independently selected from the group comprising C₁₋₁₀alkyl, heteroC₁-₁₀alkyl, heteroC₂₋₁₀alkenyl, -(CH₂)ₜ₁-Z²-**R^{k}**, -(CH₂)ₜ₂-C(=O)O**R^{l}**, and -(CH₂)ₜ₃-N(**R^{m}**)₂, and wherein each group is unsubstituted or substituted with one or more halogen; wherein **t1** is selected from 0, 1, 2 or 3; wherein **t2** is selected from 0, 1, 2 or 3, wherein **t3** is selected from 0, 1, 2 or 3, wherein Z² is selected from the group consisting of N, S, P and O; preferably selected from N, S or O; more preferably is O; wherein **R^{k}** and **R^{l}** are each independently selected from the group comprising C₁-₁₈alkyl, C₆-₁₂aryl, and C₆₋₁₂arylC₁₋₁₈alkyl, and preferably are selected from the group comprising methyl, ethyl, *t*bu, allyl, phenyl, and benzyl; and wherein each **R^{m}** is independently selected from the group comprising hydrogen and C₁-₁₈alkyl.

In certain preferred embodiments, a process is provided wherein said diolide is a compound of formula (**IIa**), stereoisomers, racemics or mixtures thereof; wherein **R^{d}** and **R^{f}** are each independently selected from the group comprising methyl, ethyl, n-butyl, sec-butyl, isobutyl, *t*bu, isopropyl, -CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.

In certain preferred embodiments of the present process, a diolide of formula (II) can have the structural formula (**IIb**) or stereoisomers, racemics or mixtures thereof, wherein each of **R^{c}** and **R^{e}** is independently hydrogen or is selected from the group comprising C₁-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₜ₁-Z²-**R^{k}**, - (CH₂)ₜ₂-C(=O)O**R^{l}**, and -(CH₂)ₜ₃-N(**R^{m}**)₂, wherein each group can be unsubstituted or substituted with one or more substituents each independently selected from the group comprising halogen, C₁-₁₈alkyloxy, and -N(**Rⁿ**)₂, and wherein each **Rⁿ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
wherein **t1, t2** and **t3** are each independently an integer selected from 0 to 18; and preferably from 0 to 12, and more preferably from 0 to 10, and most preferably selected from 0, 1, 2, 3, 4, 5, or 6;
wherein **Z²** is selected from the group consisting of N, S, P and O; preferably selected from N, S or O; more preferably is O;
wherein **R^{k}** and **R^{l}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl; and
wherein each **R^{m}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl.

In certain preferred embodiments of the present process, a diolide of formula (II) can have the structural formula **(IIb)** or stereoisomers, racemics or mixtures thereof, wherein **R^{c}** and **R^{e}** are each independently selected from the group comprising C₁₋₁₀alkyl, heteroC₁-₁₀alkyl, heteroC₂₋₁₀alkenyl, -(CH₂)ₜ₁Z²-**R^{k}**, -(CH₂)ₜ₂-C(=O)O**R^{l}**, and -(CH₂)ₜ₃-N(**R^{m}**)₂, and wherein each group is unsubstituted or substituted with one or more halogen; wherein **t1** is selected from 0, 1, 2 or 3; wherein **t2** is selected from 0, 1, 2 or 3, wherein **t3** is selected from 0, 1, 2 or 3, wherein Z² is selected from the group consisting of N, S, P and O; preferably selected from N, S or O; more preferably is O; wherein **R^{k}** and **R^{l}** are each independently selected from the group comprising C₁-₁₈alkyl, C₆-₁₂aryl, and C₆₋₁₂arylC₁₋₁₈alkyl, and preferably are selected from the group comprising methyl, ethyl, *t*bu, allyl, phenyl, and benzyl; and wherein each **R^{m}** is independently selected from the group comprising hydrogen and C₁-₁₈alkyl.

In certain preferred embodiments, a process is provided wherein said diolide is a compound of formula (**IIb**), stereoisomers, racemics or mixtures thereof; wherein **R^{c}** and **R^{e}** are each independently selected from the group comprising methyl, ethyl, n-butyl, sec-butyl, isobutyl, *t*bu, isopropyl, -CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.

In certain preferred embodiments, a diolide of formula (II) having structural formula (IIa) or stereoisomers, racemics or mixtures thereof, and/or having structural formula (IIb) or stereoisomers, racemics or mixtures thereof is applied in the present copolymerisation process, wherein each of **R^{c}**, R^{d}, **R^{e} and R^{f}** is independently selected from the group comprising C₂-₁₀alkynyl, C₆₋₁₂aryl, C₆₋₁₂arylC₁₋₁₈alkyl, heteroC₁₋₁₀alkyl, heteroC₂₋₁₀alkenyl, - (CH₂)ₜ₁-Z²-**R^{k}**, -(CH₂)ₜ₂-C(=O)O**R^{l}**, and -(CH₂)ₜ₃-N(**R^{m}**)₂, and wherein each group is unsubstituted or substituted with one or more halogen, and wherein t1, t2, t3, Z², R^{k}, R^{l} and R^{m} are as defined hereinabove.

In certain preferred embodiments, a diolide of formula (II) having structural formula (IIb) or stereoisomers, racemics or mixtures thereof is applied in the present copolymerisation process, wherein **R^{c}** and **R^{e}** are each independently selected from the group comprising C₁-₁₀alkyl, C₂-₁₀alkenyl, heteroC₁-₁₀alkyl, heteroC₂-₁₀alkenyl, -(CH₂)ₜ₁-O-**R^{k}**, -(CH₂)ₜ₂-C(=O)O**R^{l}**, and -(CH₂)ₜ₃-N(**R^{m}**)₂, and wherein each group is unsubstituted or substituted with one or more halogen, wherein t1, t2, t3 are each independently selected from 0, 1, 2 or 3, preferably from 0, 1 or 2, wherein R^{k} and R^{l} are each independently selected from the group comprising C₁-₁₈alkyl, C₆₋₁₂aryl, and C₆₋₁₂arylC₁₋₁₈alkyl, and preferably are selected from the group comprising methyl, ethyl, *t*bu, allyl, phenyl, and benzyl; and wherein each **R^{m}** is independently selected from the group comprising hydrogen and C₁-₁₈alkyl.

In certain preferred embodiments, a diolide of formula (II) having structural formula (IIa) or stereoisomers, racemics or mixtures thereof is applied in the present copolymerisation process, wherein **R^{d}** and **R^{f}** are each independently selected from the group comprising C₁-₁₀alkyl, C₂-₁₀alkenyl, heteroC₁-₁₀alkyl, heteroC₂-₁₀alkenyl, -(CH₂)ₜ₁-O-**R^{k}**, -(CH₂)ₜ₂-C(=O)O**R^{l}**, and -(CH₂)ₜ₃-N(**R^{m}**)₂, and wherein each group is unsubstituted or substituted with one or more halogen, wherein t1, t2, t3 are each independently selected from 0, 1, 2 or 3, preferably from 0, 1 or 2, wherein R^{k} and R^{l} are each independently selected from the group comprising C₁-₁₈alkyl, C₆-₁₂aryl, and C₆₋₁₂arylC₁₋₁₈alkyl, and preferably are selected from the group comprising methyl, ethyl, *t*bu, allyl, phenyl, and benzyl; and wherein each **R^{m}** is independently selected from the group comprising hydrogen and C₁-₁₈alkyl.

In some embodiments, a diolide applied in the present copolymerisation is a compound of formula (IIa), or stereoisomers, racemics or mixtures thereof, wherein **R^{f} and R^{d} are** each independently selected from C₁-₁₀alkyl optionally substituted with one or more halogen, and preferably C₁-₈alkyl optionally substituted with one or more halogen, and more preferably C₁-₆ alkyl optionally substituted with one or more halogen.

In some embodiments, a diolide applied in the present copolymerisation is a compound of formula (IIa), or stereoisomers, racemics or mixtures thereof, wherein R^{f} and R^{d} are each independently selected from -(CH₂)ₜ₁-O-R^{k}; wherein t1 is selected from 0, 1, or 2, and wherein R^{k} is selected from the group comprising C₁-₁₈alkyl, C₆-₁₂aryl, and C₆₋₁₂arylC₁₋₁₈alkyl, wherein each group is unsubstituted or substituted with one or more halogen.

In some embodiments, a diolide applied in the present copolymerisation is a compound of formula (IIa), or stereoisomers, racemics or mixtures thereof, wherein R^{f} and R^{d} are each independently selected from -(CH₂)ₜ₂-C(=O)OR^{l}, wherein t2 is selected from 0, 1, or 2, wherein R^{l} is selected from the group comprising C₁-₁₈alkyl, C₆₋₁₂aryl, and C₆₋₁₂arylC₁₋₁₈alkyl, wherein each group is unsubstituted or substituted with one or more halogen.

In some embodiments, a diolide applied in the present copolymerisation is a compound of formula (IIa), or stereoisomers, racemics or mixtures thereof, wherein **R^{f}** and **R^{d}** are each independently selected from -(CH₂)ₜ₃-N(**R^{m}**)₂, wherein t3 is selected from 0, 1, or 2, wherein R^{m} is selected from the group comprising hydrogen and C₁-₁₈alkyl.

In an example, a diolide of formula (II) having structural formula (IIa) or stereoisomers, racemics or mixtures thereof is applied in the present copolymerisation process, wherein **R^{f} and** R^{d} are each independently selected from the group comprising methyl, ethyl, n-butyl, sec-butyl, isobutyl, *t*bu, isopropyl, -CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.

In some embodiments, a diolide applied in the present copolymerisation is a compound of formula (IIb), or stereoisomers, racemics or mixtures thereof, wherein **R^{c}** and **R^{e}** are each independently selected from C₁-₁₀alkyl optionally substituted with one or more halogen, and preferably C₁-₈alkyl optionally substituted with one or more halogen, and more preferably C₁-₆ alkyl optionally substituted with one or more halogen.

In some embodiments, a diolide applied in the present copolymerisation is a compound of formula (IIb), or stereoisomers, racemics or mixtures thereof, wherein **R^{c}** and **R^{e}** are each independently selected from -(CH₂)ₜ₁-O-R^{k}; wherein t1 is selected from 0, 1, or 2, and wherein R^{k} is selected from the group comprising C₁-₁₈alkyl, C₆-₁₂aryl, and C₆₋₁₂arylC₁₋₁₈alkyl, wherein each group is unsubstituted or substituted with one or more halogen.

In some embodiments, a diolide applied in the present copolymerisation is a compound of formula (IIb), or stereoisomers, racemics or mixtures thereof, wherein **R^{c}** and **R^{e}** are each independently selected from -(CH₂)ₜ₂-C(=O)OR^{l}, wherein t2 is selected from 0, 1, or 2, wherein R^{l} is selected from the group comprising C₁-₁₈alkyl, C₆₋₁₂aryl, and C₆₋₁₂arylC₁₋₁₈alkyl, wherein each group is unsubstituted or substituted with one or more halogen.

In some embodiments, a diolide applied in the present copolymerisation is a compound of formula (IIb), or stereoisomers, racemics or mixtures thereof, wherein **R^{c}** and **R^{e}** are each independently selected from -(CH₂)ₜ₃-N(**R^{m}**)₂, wherein t3 is selected from 0, 1, or 2, wherein R^{m} is selected from the group comprising hydrogen and C₁-₁₈alkyl.

In an example, a diolide of formula (II) having structural formula (IIb) or stereoisomers, racemics or mixtures thereof is applied in the present copolymerisation process, wherein R^{c} and **R^{e} are** each independently selected from the group comprising methyl, ethyl, n-butyl, sec-butyl, isobutyl, *t*bu, isopropyl, -CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.

### Cyclic esters

In some embodiments, the copolymerization of the present invention can occur with lactide monomer and/or polylactic acid, and two or more beta-lactones of formula (I), which differ in structural formula (e.g. having different substituents). In some embodiments, the polymerization of the present invention can occur with lactide monomer and/or polylactic acid, and two or more of the same beta-lactone compounds of formula (I) differing only in stereochemistry.

In some embodiments, the copolymerization of the present invention can occur with lactide monomer and/or polylactic acid, and two or more diolides of formula (II), which differ in structural formula (e.g. having different substituents). In some embodiments, the polymerization of the present invention can occur with lactide monomer and/or polylactic acid, and two or more of the same diolide compounds of formula (I) differing only in stereochemistry.

In some embodiments, the copolymerization of the present invention can occur in the presence of one or more additional cyclic esters as defined herein, which are different from said second compound (i.e. a beta-lactone and a diolide as defined herein). In some embodiments, the copolymerization of the present invention can occur with two or more differing cyclic esters, e.g. cyclic esters which differ in structural formula, or the same cyclic esters which differ in stereochemistry.

As used herein, the terms "cyclic ester" refers to cyclic monoesters, cyclic diesters, cyclic triesters, and the like. It will be clear from the present disclosure that the term "cyclic ester" as used herein does not differ to a beta-lactone or a diolide as defined herein. It will also be clear from the present disclosure that the term "cyclic ester" does not refer to a lactide monomer or a polylactide.

In one embodiment, cyclic esters for used in the present process, or stereoisomers, racemics, or mixtures thereof are selected from the group comprising gamma-lactones, delta-lactones, epsilon-lactones, and glycolides, wherein each group can be unsubstituted or substituted with one or more substituents each independently selected from the group comprising of C₁-₆alkyl, C₁₋₆alkoxy, -NH₂, mono(C₁₋₆alkyl)amino, di(C₁₋₆alkyl)amino, C₁₋₆alkyloxyC₁₋₆alkyl and C₁₋₆alkyloxycarbonyl.

In one embodiment, cyclic esters for used in the present process, or stereoisomers, racemics, or mixtures thereof are selected from the group comprising gamma-lactones, delta-lactones, epsilon-lactones and glycolides, wherein each group can be unsubstituted or substituted with one or more substituents each independently selected from C₁₋₆alkyl or C₁₋₆alkoxy.

Non-limiting examples of suitable cyclic esters can be selected from the group comprising, glycolide, δ-valerolactone, γ-butyrolactone, γ-valerolactone, 4-methyldihydro-2(3H)-furanone, alpha-methyl-gamma-butyrolactone, ε-caprolactone, and any mixtures thereof; each group can be unsubstituted or substituted with one or more substituents each independently selected from C₁₋₆alkyl or C₁₋₆alkoxy.

For example said cyclic esters can be selected from the group comprising glycolide, δ-valerolactone, γ-butyrolactone, γ-valerolactone, 4-methyldihydro-2(3H)-furanone, alpha-methyl-gamma-butyrolactone, ε-caprolactone, and mixtures thereof.

Preferably said cyclic esters can be selected from the group comprising glycolide, δ-valerolactone, γ-butyrolactone, γ-valerolactone, alpha-methyl-gamma-butyrolactone, ε-caprolactone, and mixtures thereof.

### Catalysts

In one embodiment the catalyst employed for this process may have general formula M¹(Y¹, Y², ... Y^{p})_{q}, in which M¹ is a metal selected from the group comprising the elements of columns 3 to 12 of the periodic table of the elements, as well as the elements Al, Ga, In, TI, Ge, Sn, Pb, Sb, Ca, Mg and Bi; whereas **Y¹, Y², ... Y^{p}** are each substituents selected from the group comprising C₁₋₂₀alkyl, C₆₋₃₀aryl, C₁₋₂₀alkoxy, C6-3oaryloxy, and other oxide, carboxylate, and halide groups as well as elements of group 15 and/or 16 of the periodic table; **p** and **q** are integers of from 1 to 6. As examples of suitable catalysts, we may notably mention the catalysts of Al, Sn, Ti, Zr, Zn, and Bi; preferably an alkoxide or a carboxylate and more preferably Sn(Oct)₂, Al(OiPr)₃, Ti(OiPr)₄, Ti(2-ethylhexanoate)₄, Ti(2-ethylhexyloxide)₄, Zr(OiPr)₄, Bi(neodecanoate)₃, (2,4-di-tert-butyl-6-(((2-(dimethylamino)ethyl)(methyl)amino)methyl)phenoxy)(ethoxy)zinc, or Zn(lactate)₂.

In one embodiment, the catalyst is an organometallic catalyst of formula (III) or (IV), 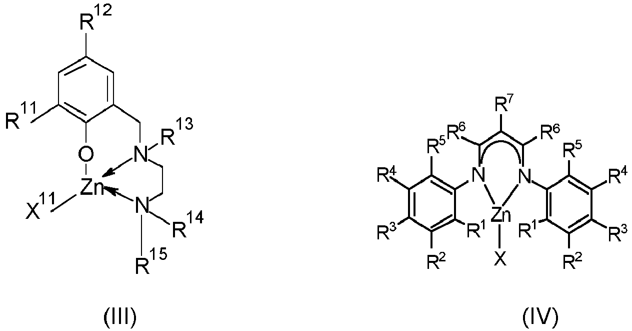 Wherein
**R¹, R², R³, R⁴, R⁵, R⁶,** and R**⁷ are** each independently selected from the group consisting of hydrogen, optionally substituted C₁₋₁₂alkyl, and an inert functional group (e.g., -CN), and wherein two or more of said groups can be linked together to form one or more rings; preferably **R¹, R², R³, R⁴, R⁵, R⁶,** and R⁷ are each independently selected from the group consisting of hydrogen, optionally substituted C₁₋₈alkyl, and an inert functional group (e.g., - CN), and wherein two or more of said groups can be linked together to form one or more rings; preferably **R¹, R², R³, R⁴, R⁵, R⁶,** and **R**⁷ are each independently selected from the group consisting of hydrogen and optionally substituted C₁₋₆alkyl; preferably **R¹, R², R³, R⁴, R⁵, R⁶,** and **R⁷** are each independently selected from the group consisting of hydrogen and optionally substituted C₁₋₄alkyl; preferably **R², R³, R⁴** and **R⁷** are each independently H, and **R¹, R⁵,** and **R⁶,** are each independently C₁₋₆alkyl;
**X** is from the group comprising -N(Si**R²⁷**₃)₂, C₁₋₁₂alkyl, C₁₋₁₂alkoxy, -N**R⁹R¹⁰** and -BH₄; preferably **X** is -N(Si**R²⁷**₃)₂, C₁₋₆alkyl, C₁₋₆alkoxy, or -N**R⁹R¹⁰**; preferably **X** is -N(Si**R²⁷**₃)₂, C₁₋₆alkyl, C₁₋₆alkoxy, or -N**R⁹R¹⁰**; preferably **X** is -N(Si**R²⁷**₃)₂;
each **R²⁷** is independently selected from hydrogen or C₁₋₆alkyl;
each **R⁹** and **R¹⁰** is independently selected from hydrogen or C₁₋₆alkyl;
**R¹¹** and **R¹²** are each independently selected from the group consisting of C₁₋₁₀alkyl; C₁₋₁₀alkoxy, NO₂, and halogen; preferably, **R¹¹** and **R¹²** are each independently selected from the group consisting of C₁-₆alkyl, C₁₋₆alkoxy, NO₂, and halogen; preferably, **R¹¹** and **R¹²** are each independently selected from the group consisting of C₁₋₄alkyl, C₁₋₄alkoxy, NO₂, and halogen; for example, **R¹¹** and **R¹²** can be each independently selected from the group consisting of methyl, ethyl, *n*-propyl, *i*-propyl, 2-methyl-ethyl, *n*-butyl, *i*-butyl, *t*-butyl, -NO₂, - OMe, CI, Br, and F; preferably, **R¹¹** and **R¹²** can be each independently selected from the group consisting of methyl, ethyl, *i*-propyl, *t*-butyl, NO₂, -OMe, and F; for example **R¹¹** and **R¹²** can be each independently selected from the group consisting of *i*-propyl, *t*-butyl, NO₂, -OMe, and F; preferably, **R¹¹** and **R¹²** are *t*-butyl;
**R¹³, R¹⁴,** and **R¹⁵** are each independently C₁₋₁₀alkyl; preferably, **R¹³, R¹⁴** and **R¹⁵** are each independently C₁₋₆alkyl; preferably **R¹³, R¹⁴** and **R¹⁵** are each independently C₁₋₄alkyl, for example, **R¹³, R¹⁴** and **R¹⁵** can be each independently selected from the group consisting of methyl, ethyl, *n*-propyl, *i*-propyl, 2-methyl-ethyl, *n*-butyl, *i*-butyl and *t*-butyl; for example, **R¹³, R¹⁴** and **R¹⁵** can be each independently selected from the group consisting of methyl, ethyl, *i-*propyl and *t*-butyl; for example, **R¹³, R¹⁴** and **R¹⁵** are each independently selected from methyl or ethyl; preferably, **R¹³**, **R¹⁴** and **R¹⁵** are each independently methyl; or
**R¹³** and **R¹⁴** are covalently bound to each other and are each a methylene and **R¹⁵** is C₁₋₁₀alkyl; preferably **R¹⁵** is C₁₋₆alkyl; preferably, **R¹⁵** is C₁₋₄alkyl; for example **R¹⁵** can be selected from the group consisting of methyl, ethyl, *n*-propyl, *i*-propyl, 2-methyl-ethyl, *n*-butyl, *i*-butyl and t-butyl; for example **R¹⁵** can be selected from the group consisting of methyl, ethyl, *i*-propyl and *t*-butyl; for example **R¹⁵** can be selected from methyl or ethyl; for example **R¹⁵** can be methyl;
**X¹¹** is selected from C₁₋₁₀alkyl, -OR¹⁶, or -N(Si**R¹⁷**₃)₂;
**R¹⁶** is C₁₋₁₀alkyl; and
each R¹⁷ is independently selected from hydrogen or C₁₋₆alkyl;
preferably, **X¹¹** is selected from C₁-₆alkyl, -OR¹⁶, or -N(SiR¹⁷₃)₂, **R¹⁶** is C₁-₆alkyl, and each **R¹⁷** is independently selected from hydrogen or C₁₋₆alkyl;
preferably, **X¹¹** is selected from C₁₋₄alkyl, -OR¹⁶, or -N(Si**R¹⁷**₃)₂, **R¹⁶** is C₁₋₄alkyl, and each **R¹⁷** is independently hydrogen or C₁₋₄alkyl;
for example **X¹¹** can be selected from the group consisting of methyl, ethyl, *n*-propyl, *i*-propyl, 2-methyl-ethyl, *n*-butyl, *i*-butyl and *t*-butyl,-OR¹⁶, and -N(Si**R¹⁷**₃)₂, **R¹⁶** can be selected from the group consisting of methyl, ethyl, *n*-propyl, *i*-propyl, 2-methyl-ethyl, *n*-butyl, *i*-butyl and *t*-butyl, and each **R¹⁷** can be independently selected from the group consisting of hydrogen, methyl, ethyl, *n*-propyl, *i*-propyl, 2-methyl-ethyl, *n*-butyl, *i*-butyl and *t*-butyl; preferably, **X¹¹** can be selected from the group consisting of methyl, ethyl, *i*-propyl and *n*-butyl, and -OR¹⁶, **R¹⁶** can be selected from the group consisting of methyl, ethyl, *i*-propyl and *t*-butyl; preferably, **X¹¹** can be selected from -OR¹⁶, **R¹⁶** can be selected from the group consisting of methyl, ethyl, *i-*propyl and *t*-butyl; preferably, **X¹¹** can be -OR¹⁶, and **R¹⁶** is ethyl.

In the present description, an inert functional group is defined as a group containing one or several heteroatoms selected from O, N, S or halogen, that is(are) not reactive in the polymerization system neither as an initiating species nor as a chain transfer agent.

In one embodiment, **R¹¹** and **R¹²** are each independently C₁-₆alkyl, preferably C₁₋₄alkyl.

In one embodiment, **R¹¹** and **R¹²** are each independently selected from the group consisting of NO₂, and halogen;

In one embodiment, **R¹¹** and **R¹²** are each independently selected from the group consisting of C₁₋₁₀alkoxy, preferably C₁₋₆alkoxy, more preferably C₁₋₄alkoxy.

In one +₆alkyl, C₆₋₁₀aryl, -O**R^{3c}**, -S**R^{3c}**; and -PF₆; for example suitable L^{2a} can be selected from the group comprising -N(SiMe₃)₂, -N(SiHMe₂)₂, -NPh₂, -CH₂SiMe₃, -CH(SiMe₃)₂, -CH₃, - C₆H₄CH₂NMe₂, -CH₂(2-NMe₂)C₆H₄, -C₆H₅, -O*i*Pr, 2,6-*t*Bu₂CoH₃O-, 4-MeC₆H₄O-, 4-MeOC₆H₄O-, CF₃CH₂O-, PhCH₂O-, 4-MeC₆H₄S-, 2,6-*t*Pr₂C₆H₃O-, -OPh, -OtBu, -OTf, and - PF₆,
wherein R^{3a} is selected from H or Me, **R^{3b}** is C₆₋₁₀aryl, **R^{3c}** is selected from the group comprising C₁₋₆alkyl, C₆₋₁₀aryl, C₁₋₆alkylC₆₋₁₀aryl, C₁₋₆alkyloxyC₆₋₁₀aryl, haloC₁₋₆alkyl, and C₆₋₁₀arylC₁₋₆alkyl,
**R^{3d}** is selected from C₆₋₁₀aryl, or C₁₋₆alkylC₆₋₁₀arylC₁₋₆alkyl,
**L^{1a}** is a tetradentate ligand of formula 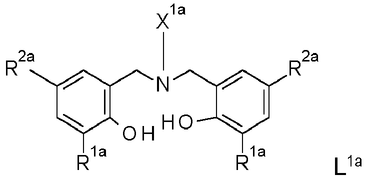
wherein
**R^{1a}** and **R^{2a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable R^{1a} and R^{2a} can be each independently selected from the group comprising -CI, -F, -Br, -Me, -Et, -tBu, adamantly, -CMe₂Ph, -CPh₃, -CMe₂*t*Bu, and -CMe₂(*p*-CF₃Ph), and
**X^{1a}** is selected from the group comprising C₁₋₆alkyoxyC₁₋₆alkyl, di(C₁₋₆alkyl)aminoC₁₋₆alkyl; di(C₁₋₆alkyl)amino, heteroarylC₁₋₆alkyl, and heterocyclylC₁₋₆alkyl, for example suitable **X^{1a}** can be selected from the group comprising -(CH₂)₂OMe, -(CH₂)₂NMe₂, -(CH₂)₃NMe₂, -(CH₂)₂NEt₂, -CH₂(2-pyridyl), -(CH₂)₂(2-THF), -NMe₂, -(CH₂)₂*N*Benzoxazine, and -CH₂(2-furyl); wherein each of said groups can be unsubstituted or substituted with one or more C₁₋₆alkyl substituents,
**L^{3a}** is a ligand of formula 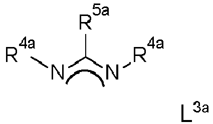
wherein **R^{4a}** is selected from the group comprising C₆₋₁₀aryl, C₁-₆alkyl, diC₁₋₆alkylamino, C₁₋₆alkylC₆₋₁₀aryl, C₁₋₆alkyloxyC₆₋₁₀aryl, C₆₋₁₀arylC₁₋₆alkyl, and diC₁₋₆alkylaminoC₁₋₆alkylC₆₋₁₀aryl, or two R^{4a} together can form a C₁₋₆alkylene; and
wherein **R^{5a}** is selected from C₆₋₁₀aryl, -N(SiR^{3a}Me2)₂, or diC₁₋₆alkylamino, and
**L^{4a}** is a tetradentate ligand of formula 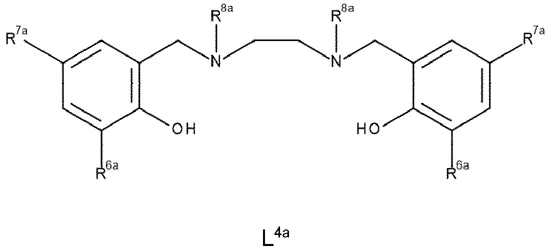
wherein **R^{6a}** and **R^{7a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable **R^{6a} and R^{7a}** can be each independently selected from the group comprising -CI, -Me, -Et, -*t*Bu, adamantly, -CMe₂Ph, -CPh₃, -CMe₂*t*Bu, and -CMe₂(*p*-CF₃Ph), and
wherein **R^{8a}** is selected from the group comprising C₁₋₁₀alkyl, C₃₋₁₀cycloalkyl, C₅₋₁₀aryl, and C₅₋₁₀arylC₁₋₁₀alkyl, and can for example be selected from the group comprising -Me, -Et, -*t*Bu, cyclohexyl and phenyl, and
L^{5a} is a tetradentate ligand of formula 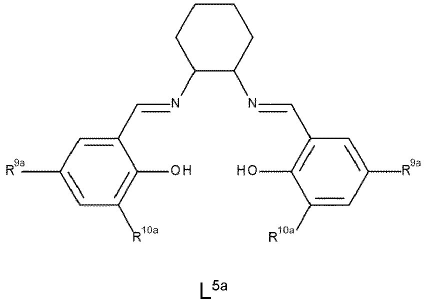
wherein **R^{9a} and R^{10a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable R^{9a} and R^{10a} can be each independently selected from the group comprising -CI, -Me, -Et, -tBu, adamantly, -CMe₂Ph, -CMe₂*t*Bu, -CPh₃, and -CMe₂(*p*-CF₃Ph).

In one example, the catalyst is selected from the group comprising Y[N(SiMe₃)₂]₃ and Y[N(SiHMe₂)₂]₃.

In another example the catalyst is a rare-earth complex of formula M^{1a}L^{2a}L^{4a}, wherein M^{1a} is Y, L^{2a} is -N(SiHMe₂)₂ and wherein L^{4a} corresponds to the ligand as represented in scheme 1. Such catalyst may be prepared as explained in Kramer et al. 2009 (J Am Chem Soc. 131 :16042-16044).

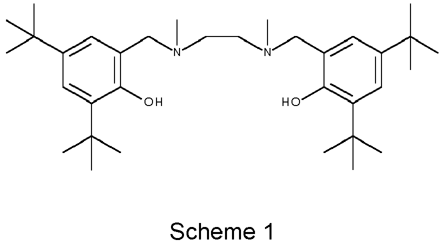

In another example the catalyst corresponds to a rare-earth complex as depicted in scheme 2 below. Such catalyst may be prepared as explained in Kramer et al. 2009 (J Am Chem Soc. 131 :16042-16044).

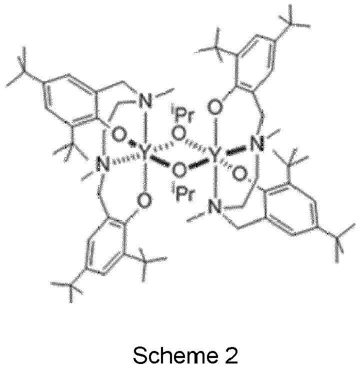

In another example the catalyst is a rare-earth complex of formula M^{1a}L^{1a}L^{2a}(donor)ₙ, or dimeric forms thereof; wherein M^{1a} is Y, L^{2a} is -N(SiHMe₂)₂, n is 1, the donor is THF, and wherein L^{1a} corresponds to the ligand depicted below 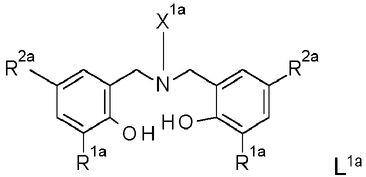 wherein
**X^{1a}** is a C₁₋₆alkyoxyC₁₋₆alkyl, and preferably -(CH₂)₂OMe,
wherein each **R^{2a}** is each independently selected from the group comprising halo, C₁₋₁₀alkyl, and C₅₋₁₀arylC₁₋₆alkyl, and preferably is selected from the group comprising -CI, -Me, -Et, -*t*Bu, adamantly, and -CMe₂Ph, and
wherein each **R^{1a}** is each independently selected from the group comprising halo, C₁₋₁₀alkyl, C₅₋₁₀arylC₁₋₆alkyl, and haloC₁₋₆alkylC₅₋₁₀arylC₁₋₆alkyl, and preferably is selected from the group comprising -CI, -Me, -Et, -*t*Bu, -CMe₂Ph, -CPh₃, -CMe₂*t*Bu, and -CMe₂(*p*-CF₃Ph).

In another example the catalyst is a rare-earth complex of formula M^{1a}L^{1a}L^{2a}(donor)ₙ; wherein M^{1a} is Y, L^{2a} is -N(SiHMe₂)₂, n is 1, the donor is THF, and L^{1a} corresponds to the ligand depicted in **scheme 3 or scheme 4** below 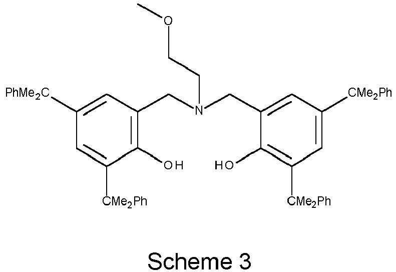 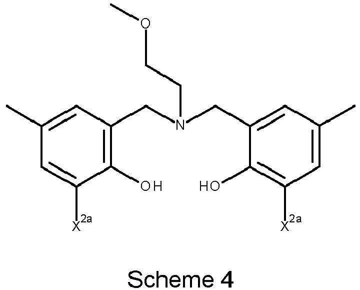 wherein X^{2a} is selected from the group comprising -CMe₂Ph, -CPh₃, -CMe₂*t*Bu, and -CMe₂(*p-*CF₃Ph). Such catalysts may be prepared as explained in Bouyahyi et al. 2011 (Chem Eur J.17:1872-1883).

In another example the catalyst corresponds to the rare-earth complex as depicted in scheme 5 below

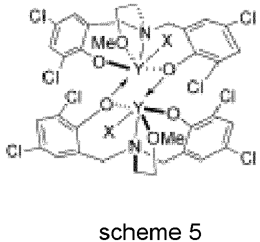

Such catalyst may be prepared as explained in Bouyahyi et al. 2011 (Chem Eur J.17:1872-1883).

In another example, the catalyst is a rare-earth complex of formula M^{1a}L^{1a}L^{2a}(donor)ₙ, or halide or hydride complexes thereof (such as chloride or borohydride), or homoleptic or dimeric forms thereof; wherein **M^{1a}** is rare earth metal selected from the group comprising Y, La, Sm, Tb, Lu, Nd, Yb, Sc, Er, Pr, Gd, Ho, and Eu, and preferably selected from Y, Sc or La;
wherein the donor is selected from THF or DME (Et₂O), preferably is THF,
wherein **n** is selected from 0, 1, or 2; and preferably is 1 or 2, more preferably 1,
wherein **L^{2a}** is selected from the group comprising -CH(SiMe₃)₂, -N(SiR^{3a}Me₂)₂, and -OR^{3c}; for example suitable L^{2a} is selected from the group comprising -N(SiHMe₂)₂, -CH(SiMe₃)₂, -O*i*Pr, -OPh, and -OtBu, wherein **R^{3a}** is selected from H or Me, **R^{3c}** is selected from the group comprising C₁-₆alkyl, C₆₋₁₀aryl, and C₁₋₆alkylC₆₋₁₀aryl, and preferably C₁₋₄alkyl, and more preferably selected from the group consisting of methyl, ethyl, *i*-propyl and *t*-butyl;
wherein **L^{1a}** is a tetradentate ligand of formula 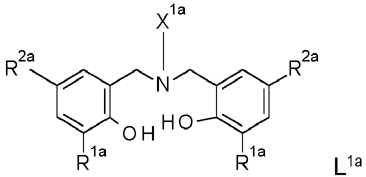
wherein **R^{1a}** and **R^{2a}** are each independently selected from the group comprising halo, C₁₋₁₀alkyl, C₃₋₁₂cycloalkyl, and C₅₋₁₀arylC₁₋₆alkyl, and for example suitable R^{1a} and R^{2a} can be each independently selected from the group comprising -CI, -F, -Br, -Me, -Et, -tBu, adamantly, - CMe₂Ph, -CPh₃, -CMe₂*t*Bu, and -CMe₂(*p*-CF₃Ph), and
**X^{1a}** is selected from the group comprising C₁₋₆alkyoxyC₁₋₆alkyl and di(C₁₋₆alkyl)aminoC₁₋₆alkyl; for example suitable **X^{1a}** is selected from the group comprising -(CH₂)₂OMe, -(CH₂)₂NMe₂, - (CH₂)₃NMe₂, and -(CH₂)₂NEt₂.

In one example, the catalyst is a rare-earth complex of formula M^{1a}L^{1a}L^{2a}(donor)ₙ, wherein n is 1, wherein the donor is THF, wherein M^{1a} is Y, wherein L^{2a} is -N(SiHMe₂)₂, wherein X^{1a} is - (CH₂)₂OMe, and wherein R^{1a} and R^{2a} are both methyl or are both t-butyl.

In one example, the catalyst is a rare-earth complex of formula M^{1a}L^{1a}L^{2a}(donor)ₙ, wherein n is 1, wherein the donor is THF, wherein M^{1a} is Y, wherein L^{2a} is -N(SiHMe₂)₂, wherein X^{1a} is - NMe₂, and wherein R^{1a} and R^{2a} are both methyl or are both t-butyl.

In one example, the catalyst is a rare-earth complex of formula M^{1a}L^{1a}L^{2a}(donor)ₙ, wherein n is 1, wherein the donor is THF, wherein M^{1a} is Y, wherein L^{2a} is -N(SiHMe₂)₂, wherein X^{1a} is - (CH₂)₂OMe, wherein R^{2a} is methyl and wherein R^{1a} is selected from the group consisting of - tBu, -CMe₂Ph, -CPh₃, -CMe₂*t*Bu, and -CMe₂(*p*-CF₃Ph).

In one example, the catalyst is a rare-earth complex of formula M^{1a}L^{1a}L^{2a}(donor)ₙ, wherein n is 1, wherein the donor is THF, wherein M^{1a} is Y, wherein L^{2a} is -N(SiHMe₂)₂, wherein X^{1a} is - NMe₂, wherein R^{2a} is methyl and wherein R^{1a} is selected from the group consisting of -tBu, - CMe₂Ph, -CPh₃, -CMe₂*t*Bu, and -CMe₂(*p*-CF₃Ph).

In one example, the catalyst is a rare-earth complex of formula M^{1a}L^{1a}L^{2a}(donor)ₙ, wherein n is 1, wherein the donor is THF, wherein M^{1a} is Y, wherein L^{2a} is -N(SiHMe₂)₂, wherein X^{1a} is-(CH₂)₂OMe or -NMe₂, and wherein **R^{1a}** and **R^{2a}** are both -CI, or both -F, or both -Br.

In another example, the catalyst is a rare-earth complex of formula M^{1a}L^{2a}L^{4a}, or halide or hydride complexes thereof (such as chloride or borohydride), or homoleptic or dimeric forms thereof; wherein **M^{1a}** is rare earth metal selected from the group comprising Y, La, Sm, Tb, Lu, Nd, Yb, Sc, Er, Pr, Gd, Ho, and Eu, and preferably selected from Y or Yb;
wherein **L^{2a}** is selected from the group comprising -CH(SiMe₃)₂, -N(Si**R^{3a}**Me₂)₂, and **-OR^{3c};** for example suitable L^{2a} is selected from the group comprising -N(SiHMe₂)₂, -CH(SiMe₃)₂, -O*i*Pr, -OPh, and -OtBu, wherein **R^{3a}** is selected from H or Me, **R^{3c}** is selected from the group comprising C₁₋₆alkyl, C₆₋₁₀aryl, and C₁₋₆alkylC₆₋₁₀aryl, and preferably C₁₋₄alkyl, and more preferably selected from the group consisting of methyl, ethyl, *i*-propyl and *t*-butyl;
wherein **L^{4a}** is a tetradentate ligand of formula 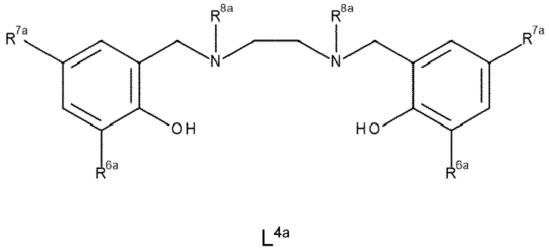
wherein **R^{6a}** and **R^{7a}** are each independently selected from the group comprising halo, C₁₋₁₀alkyl, C₃₋₁₂cycloalkyl, and C₅₋₁₀arylC₁₋₆alkyl, for example suitable **R^{6a} and R^{7a}** can be each independently selected from the group comprising -Cl, -Me, -Et, -tBu, -CMe₂Ph, -CPh₃,-CMe₂*t*Bu, and -CMe₂(*p*-CF₃Ph), and preferably each are independently -Me or -*t*Bu,
and wherein **R^{8a}** is selected from the group comprising C₁₋₁₀alkyl, C₃₋₁₀cycloalkyl, C₅₋₁₀aryl, and C₅₋₁₀arylC₁₋₁₀alkyl, and is for example selected from the group comprising -Me, -Et, -*t*Bu, cyclohexyl and phenyl.

In one example, the catalyst is a rare-earth complex of formula M^{1a}L^{2a}L^{4a}, wherein M^{1a} is Y or Yb, wherein L^{2a} is -N(SiHMe₂)₂, wherein R^{6a} and R^{7a} are -*t*Bu, and wherein **R^{8a}** is selected from the group consisting of -Me,-*t*Bu, cyclohexyl and phenyl.

In another example, the catalyst is a rare-earth complex of formula M^{1a}L^{2a}L^{5a}(donor)ₙ, or halide or hydride complexes thereof (such as chloride or borohydride), or homoleptic or dimeric forms thereof; wherein **M^{1a}** is rare earth metal selected from the group comprising Y, La, Sm, Tb, Lu, Nd, Yb, Sc, Er, Pr, Gd, Ho, and Eu, and preferably is Y;
wherein the donor is selected from THF or DME (Et₂O), preferably is THF,
wherein n is selected from 0, 1, or 2; and preferably is 0 or 1,
wherein **L^{2a}** is selected from the group comprising -CH(SiMe₃)₂, -N(Si**R^{3a}**Me₂)₂, and **-**O**R^{3c};** for example suitable L^{2a} is selected from the group comprising -N(SiHMe₂)₂, -CH(SiMe₃)₂, -O*i*Pr, -OPh, and -OtBu, wherein **R^{3a}** is selected from H or Me, **R^{3c}** is selected from the group comprising C₁₋₆alkyl, C₆₋₁₀aryl, and C₁₋₆alkylC₆₋₁₀aryl, and preferably C₁₋₄alkyl, and more preferably selected from the group consisting of methyl, ethyl, *i*-propyl and *t*-butyl;
wherein L^{5a} is a tetradentate ligand of formula 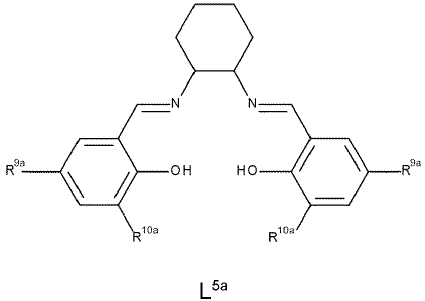
wherein **R^{9a} and R^{10a}** are each independently selected from the group comprising halo, C₁₋₁₀alkyl, and C₅₋₁₀arylC₁₋₆alkyl, and for example suitable R^{9a} and R^{10a} can be each independently selected from the group comprising -Cl, -Me, -Et, -*t*Bu, -CMe₂Ph, -CPh₃, -CMe₂*t*Bu, and-CMe₂(*p*-CF₃Ph).

In one example, the catalyst is a rare-earth complex of formula M^{1a}L^{2a}L^{sa}(donor)ₙ, wherein M^{1a} is Y, wherein n is 1 and the donor is THF, wherein L^{2a} is -N(SiHMe₂)₂, wherein R^{9a} and R^{10a} are each independently selected from the group consisting of methyl, -tBu and -CMe₂Ph.

In one example, the catalyst is a rare-earth complex of formula M^{1a}L^{2a}L^{5a}, wherein M^{1a} is Y, wherein L^{2a} is -N(SiHMe₂)₂, wherein R^{9a} is methyl or t-butyl, preferably methyl, and wherein R^{10a} is-CPh₃.

In another example, the catalyst is a a complex of general formula **M^{2a}L^{6a}L^{7a},** in which **M^{2a}** is Zr or Hf, **L^{6a}** is selected from the group comprising C₁₋₁₂alkyl, and -O**R^{3e};** wherein **R^{3e}** is selected from the group comprising C₁₋₆alkyl, C₁₋₆alkylC₆₋₁₀aryl, and C₁₋₆alkyloxycarbonylC₁₋₆alkyl; for example suitable **L^{6a}** can be selected from the group comprising methyl, -tBu, -O*t*Bu, -O*i*Pr, and -OCH(CH₃)CO₂CH₃, and wherein L^{7a} is a ligand of formula

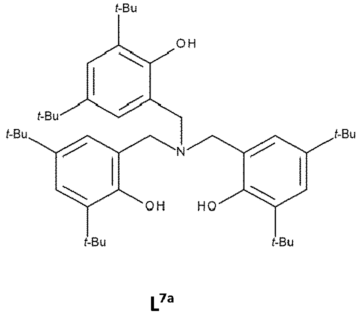

Non-limiting examples of suitable catalysts are described in and can be prepared as described in the following: Carpentier (Organometallics 2015; 34, 4175-4189); or Bouyahyi et al. (Chem Eur J. 2011;17:1872-1883), or Kramer et al. (J Am Chem Soc. 2009;131:16042-16044), or Li et al. (Chem. Eur. J. 2020; 26 (1), 128-138), or Ligny et al. (Chem. Commun. 2018; 54 (58), 8024-8031).

### Reaction conditions

In one embodiment, the process is performed in the presence of at least one initiator. In one embodiment, said initiator is a compound of formula (V), 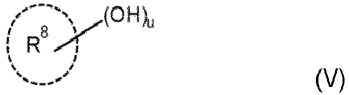 wherein **R⁸** is selected from the group comprising C₁₋₂₀alkyl, C₆₋₃₀aryl, and C₆₋₃₀arylC₁₋₂₀alkyl optionally substituted by one or more substituents Z³, wherein each Z³ is independently selected from the group comprising halogen, hydroxyl, C₁₋₆alkyl, C₁₋₆alkoxy, mono- or di-alkylamino, C₁₋₆alkyloxyC₁₋₆alkyl (-COR), C₁₋₆alkylcarbonyl (-CO₂R), thioC₁₋₆alkyl (-SR), -SO₂₋C₁₋₆alkyl, -CON(R^{z1})₂, and N(R^{z2})COR^{z3}, wherein R^{z1}, R^{z2} and R^{z3} are each independently selected from the group consisting of hydrogen, C₁₋₆alkyl, C₆₋₁₀aryl, and C₁₋₆alkylC₆₋₁₀aryl, and wherein u is an integer selected from the group consisting of the integers from 1 to 10; preferably from 1 to 5, more preferably u is an integer selected from 1, 2 or 3.

It is clear from the above formula (V) that R⁸ can be substituted by one or more hydroxyl groups.

Preferably, **R⁸** is selected from the group comprising C₃₋₁₂alkyl, C₆₋₁₀aryl, and C₆₋₁₀arylC₃₋₁₂alkyl, wherein each group is optionally substituted by one or more substituents, each independently selected from the group consisting of halogen, hydroxyl, and C₁₋₆alkyl; preferably, **R⁸** is selected from the group comprising C₃₋₁₂alkyl, C₆₋₁₀aryl, and C₆₋₁₀arylC₃₋₁₂alkyl, wherein each group is optionally substituted by one or more substituents, each independently selected from the group consisting of halogen, hydroxyl and C₁₋₄alkyl, and u is an integer selected from the group consisting of integers from 1 to 5, and more preferably is selected from 1, 2 or 3.

In an example, the alcohol can be a polyol such as diol, triol or higher functionality polyhydric alcohol. The alcohol may include a primary, secondary or tertiary alcohol. The alcohol may be derived from biomass such as for instance glycerol or 1,3-propanediol or any other sugar-based alcohol such as for example erythritol. The alcohol can be used alone or in combination with another alcohol.

In one embodiment, at least one initiator or compound of formula (V) is selected from the group comprising 1-octanol, isopropanol, 1,3-propanediol, trimethylolpropane, 2-butanol, 3-buten-2-ol, 1,3-butanediol, 1,4-butanediol, 1,6-hexanediol, 1,7-heptanediol, benzyl alcohol, 4-bromophenol,1,4-benzenedimethanol, and (4-trifluoromethyl)benzyl alcohol; preferably, said compound of formula (V) is selected from 1-octanol, isopropanol, or 1,4-butanediol.

In one embodiment, the molar ratio of initiator (compound of formula (V)) versus the catalyst is from about 0 to about 1000, for example from about 1 to about 1000, for example of from about 1 to about 100, for example of from about 1 to about 10 or from about 1 to about 5.

In certain embodiments, the process according to the invention comprises a simultaneous copolymerisation of lactide monomer and/or polylactic acid with said second compound and said one or more optional cyclic esters. Simultaneous polymerisation processes as provided herein permit to prepare random lactide copolymers having tailored properties. Such embodiments of the present invention advantageously allow the preparation of lactide copolymers in a one-pot and one-step method. For instance, in certain embodiments, the present process comprises the step of preparing a mixture of lactide monomer and/or polylactic acid with a second compound as defined herein, e.g. a beta-lactone, a diolide or a mixture of a beta-lactone and a diolide, and optionally one or more cyclic esters as defined herein, and subjecting said mixture to a polymerisation reaction in the presence of at least one catalyst, and optionally an initiator, to yield a lactide copolymer.

In certain embodiments the present process for preparing lactide copolymers also encompasses sequential polymerisation processes. In certain embodiments, a copolymerisation of lactide monomer and/or polylactic acid with at least one second compound according to the invention is carried out in two or more sequential steps. Sequential polymerisation processes as provided herein permit to prepare block copolymers having tailored properties.

For instance, the present invention may include a polymerisation processes, comprising a first step wherein a second compound as defined herein, e.g. a diolide or a beta-lactone as defined herein, is polymerised in the presence of at least one catalyst and optionally at least one initiator to yield a first reaction product, followed by a second step in which lactide monomer and/or polylactic acid is reacted with the reaction product of said first step. The present invention may include a polymerisation processes, comprising a first step wherein a second compound as defined herein, e.g. a diolide or a beta-lactone as defined herein, is polymerised in the presence of at least one catalyst and optionally at least one initiator to yield a first reaction product, followed by a second step in which lactide monomer and/or polylactic acid is reacted with the reaction product of said first step. In another example, the present invention may include a polymerisation processes, comprising a first step wherein lactide monomer and/or polylactic acid is polymerised in the presence of at least one catalyst and optionally at least one initiator to yield a first reaction product, followed by a second step in which a second compound as defined herein, e.g. a diolide or a beta-lactone is reacted with the reaction product of said first step.

In another example, the present invention may include a polymerisation processes, wherein in a first step a diolide as defined herein is polymerised in the presence of at least one catalyst and optionally at least one initiator to yield a first reaction product, followed by a second step in which a beta-lactone is reacted with the first reaction product to yield a second reaction product, followed by a third step in which lactide monomer and/or polylactic acid is reacted with the second reaction product to yield a lactide copolymer. In another example, the present invention may include a polymerisation processes, wherein in a first step lactide monomer and/or polylactic acid is polymerised in the presence of at least one catalyst and optionally at least one initiator to yield a first reaction product, followed by a second step in which a beta-lactone or a diolide is reacted with the first reaction product to yield a second reaction product, followed by a third step in which respectively a diolide or a beta-lactone as given herein is reacted with the second reaction product to yield a lactide copolymer.

Other variations of such sequential polymerisation processes, in which in addition one or more cyclic esters as defined herein are also applied is as well contemplated by the present invention.

In certain embodiments of the present process, in which sequential copolymerisation is applied, the compound added in the first step of the process (e.g. the lactide monomer and/or PLA) is converted, preferably fully converted (i.e. fully reacted or "consumed"), prior to addition of the following compound (e.g. a beta-lactone or a diolide) in a next step of the process.

In certain embodiments, lactide copolymers obtained in accordance with the copolymerisation processes of the invention may be further modified. For instance, in certain preferred embodiments, a modification according to the invention comprises chemically bonding of functional molecules, preferably directly, onto a lactide copolymer as obtained herein, in order to modify its properties. Any suitable functional molecules may be used in embodiments of the present invention. These functional groups can for instance be selected from the group comprising carboxy, hydroxyl, halogen, sulphono, sulphoxy, nitro, and sugar molecules preferably selected from pentoses or hexoses, e.g. glucose, fructose.

In one embodiment, the process is performed at temperature comprised between -60°C and 150°C, preferably between 0°C and 100°C, more preferably between 20°C and 80°C. For example, the process can be performed, preferably at a temperature of at least 20 °C and at most 150 °C, for example, the process can be performed, preferably at a temperature of at least 20 °C and at most 120 °C, for example at least 20 °C and at most 100 °C, for example at a temperature of at least 20 °C and at most 80 °C, for example at a temperature of between 20°C and 50°C. In certain embodiment the process is performed at room temperature.

In an embodiment, the process is performed in the presence or absence (in bulk) of solvent. In one embodiment, the process is performed in the presence of a solvent. In one embodiment, process is performed in the presence of an aprotic polar solvent or an aprotic apolar solvent. In one embodiment, process is performed in the presence of an aprotic apolar solvent. In a preferred embodiment, the solvent is selected from an aliphatic or aromatic hydrocarbon, an ether, a halogenated solvent, and a C₁₋₆alkyl carbonate. In preferred embodiments, the process is performed in the absence of a protic solvent. In another embodiment, the present process is performed in bulk.

The process can be performed with or without solvent, or can be performed in a minimum amount of solvent. In an embodiment, said minimum amount of solvent can be the solvent necessary to dissolve the catalyst. The solvent can be an aromatic or aliphatic hydrocarbon, an ether, or a halogenated solvent such as chlorinated solvent.

In an embodiment, the solvent is selected from the group comprising an alkane such as hexane or heptane; an aromatic hydrocarbon such as toluene; an ether such as tetrahydrofuran (THF) or dioxane; and a chlorinated solvent such dichloromethane; and a C₁₋₆alkyl carbonate such as dimethyl carbonate; preferably the solvent is an aromatic hydrocarbon, such as toluene.

In an embodiment, the process can be performed by contacting lactide monomer and/or polylactic acid with at least one second compound (beta-lactone and/or diolide) as defined herein with at least one catalyst as defined herein and optionally at least one initiator, in a reactor equipped with an agitator, for instance a high viscosity agitator.

In an embodiment, the process can be performed by contacting said lactide monomer and/or polylactic acid with at least one second compound (beta-lactone and/or diolide) as defined herein) as defined herein with at least one catalyst as defined herein and optionally at least one initiator, optionally in the presence of a solvent. In some embodiments, the process can be performed by contacting the catalyst and optionally at least one initiator, and then, subsequently adding lactide monomer and/or polylactic acid and least one second compound (beta-lactone and/or diolide) as defined herein, optionally in the presence of a solvent.

In an embodiment, the process can be performed by contacting lactide monomer and/or polylactic acid with at least one second compound (beta-lactone and/or diolide) as defined herein, the catalyst, and optionally at least one initiator optionally in the presence of a solvent, under inert atmosphere, for example in the presence of argon or nitrogen.

In certain embodiments, the present process allows to tailor the properties, such as the molecular weight of the lactide copolymers by adapting the molar ratio of of the monomers versus the catalyst versus the initiator compound of formula (V).

In an embodiment of the present process, the molar ratio of initiator to catalyst is comprised between 1 and 1000, preferably between 1 and 100, and more preferably between 1 and 10.

In an embodiment of the present process, the molar ratio of lactide monomer and/or polylactic acid to catalyst is equal to or lower than 1050, or between 10 and 1050, or between 10 and 700.

In an embodiment of the present process, the molar ratio of beta-lactone to catalyst is equal to or lower than 1500, and for instance comprised between 10 and 1500, or between 10 and 1000.

In an embodiment of the present process, the molar ratio of diolide to catalyst is equal to or lower than 750, and for instance comprised between 10 and 750, or between 10 and 500.

In an embodiment of the present process, the molar ratio of lactide monomer and/or polylactic acid to beta-lactone is equal to or lower than 1050, and for instance equal to or lower than 700.

In an embodiment of the present process, the molar ratio of lactide monomer and/or polylactic acid to diolide is equal to or lower than 1050, and for instance equal to or lower than 700.

### Copolymers

The present invention also encompasses lactide copolymers obtainable by any one of the processes of the invention. In an embodiment, the invention encompasses lactide copolymers obtainable by the process according to any one of the embodiments presented herein.

In some embodiments, lactide copolymers prepared with a process of the invention can be characterised by their molar mass and molar mass distribution.

The "molar mass distribution" or "dispersity" is defined by the ratio *M_{w}*/*Mₙ* of the weight average molecular weight *M_{w}* to the number average molecular weight *Mₙ* as determined by Size Exclusion Chromatography.

The *Mₙ* can be measured by any adequate technique known to the skilled persons for molar mass determination, for instance by chromatography such as size exclusion chromatography (SEC, also referred to as gel permeation chromatography, GPC)) in tetrahydrofuran (THF) at a suitable temperature, of e.g. 20 °C or 35°C, calibrated with standards, e.g. polystyrene or PMMA standards.

In an embodiment, the present process allows the preparation of lactide copolymers, with a number average molecular weight *Mₙ* which can range between about 250 and about 150,000 g/mol (250 Da to 150 kDa). For example, the *Mₙ* of the lactide copolymers obtained can range between about 2,500 and about 35,000 g/mol.

In an embodiment, the mass molar distribution of the lactide copolymers obtained can range from about 1.1 to about 3, and for instance from 1.1 to 2.0. In certain embodiments, the mass molar distribution of the lactide copolymers is lower than 3.0, preferably lower than 2.0.

The process of the present invention allows improved incorporation of a compound of formula (I) and/or (II) into the PLA backbone of the resulting lactide copolymers. The incorporation is calculated as the molar percentage (mol-%) of compound(s) of formula (I) and/or (II) converted to lactide copolymer as follows: [molar amount of compound(s) of formula (I) and/or (II) in the precipitated lactide copolymer obtained after the process divided by the sum of the molar amounts of compound(s) of formula (I) and/or (II) in the precipitated lactide copolymer obtained after the process] x 100. The molar amounts of compound(s) of formula (I) and/or (II) in the precipitated lactide copolymer obtained after the process can be measured by techniques that are known in the art such as e.g. by ¹H NMR.

The present invention also encompasses an article comprising a lactide copolymer according to the invention, or a lactide copolymer prepared according to any one of the process of the invention.

The present invention can be further illustrated by the following examples, although it will be understood that these examples are included merely for purposes of illustration and are not intended to limit the scope of the invention unless otherwise specifically indicated. The skilled person will know how to choose the most suitable operational conditions, such as solvents, concentrations, temperatures, reaction times, etc., based on the information disclosed in the present description and claims.

### EXAMPLES

### Materials

The following materials are used in the examples.

The "L-Lactide" of the below examples refers to a lactide monomer having more than 95 % isomeric purity and for instance available from the company Total Corbion PLA, Gorinchem, The Netherlands.

The "PLLA" of the below example refers to polylactic acid of L-lactic acid isomer, having a Mn comprised between about 1 and 20 kDa. This polymer is obtained by ring opening polymerisation of L-Lactide, in the presence of a suitable catalyst and initiator according to methods that are well known in the art.

The beta-lactone of the below examples is represented by the below formula, herein also denoted as ethyl-(R)-beta-butyrolactone or (R)-BL^{Et}. A beta-lactone of this type may be prepared according to methods known in the art.

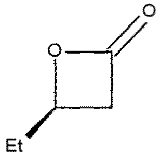

The diolide of the below examples is racemic diolide represented by the below formula and herein also rac-DL^{Et}. A diolide of this type may be prepared according to methods known in the art.

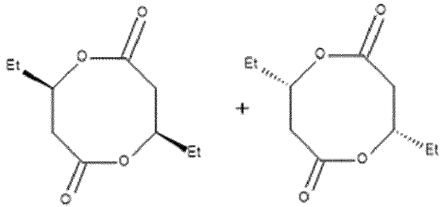

### Methods

Properties of lactide copolymers obtained by the methods of the invention may analyzed using techniques known in the art, such as but not limited to ¹³C or ¹H NMR, SEC (in THF) measurements, mass spectrometry (MALDI-ToF or, ES-MS) differential scanning calorimetry (DCS) and thermogravimetric analyses TGA. Such techniques are well known in the art, and the skilled person will know how to choose suitable conditions for carrying out measurements based on common general knowledge and the information disclosed herein.

### Example 1: Simultaneous co-polymerisation of L-lactide with beta-lactone

Example 1 concerns a simultaneous copolymerization experiment. In a glovebox, a catalyst/initiator solution is prepared by charging a Schlenk flask with Y(N(SiHMe₂)₂)₃(THF)₂ (6.3 mg, 0.01 mmol) and {ONNO(Cumyl)₂}H₂ (7.7 mg, 0.01 mmol), and toluene is then added. To this solution, iPrOH (76 µL of a 1% (v/v) solution in toluene, 0.01 mmol, 1 equiv. vs. Y) is added under stirring at room temperature and stirred at about 20 °C for at least 5 min.

A mixture of beta-lactone (i.e. (R)-BL^{Et}: 0.20 g, 2.0 mmol, 205 equiv. vs. Y) and L-lactide (0.29 g, 2.0 mmol, 205 equiv. vs. Y) in toluene is added rapidly to the catalyst/initiator solution. The reaction mixture is stirred at a temperature of at least about 20°C for a suitable period of time and finally quenched by addition of acetic acid (1.6 mol·L⁻¹ solution in toluene). The resulting mixture is concentrated to dryness under vacuum and the conversion may be determined by ¹H NMR analysis of the residue in CDCl₃. The crude copolymer is then dissolved in CH₂Cl₂ and is precipitated in cold pentane, filtered and dried. The final copolymer can be analyzed using techniques known in the art, such as those described above.

### Example 2: Sequential co-polymerisation of L-lactide with beta-lactone

Example 2 concerns a sequential copolymerization experiment. In a glovebox, a catalyst/initiator solution is prepared by charging a Schlenk flask with Y(N(SiHMe₂)₂)₃(THF)₂ (6.3 mg, 0.01 mmol) and {ONNO(Cumyl)₂}H₂ (7.7 mg, 0.01 mmol), and toluene is then added. To this solution, iPrOH (76 µL of a 1% (v/v) solution in toluene, 0.01 mmol, 1 equiv vs. Y) is added under stirring at room temperature and then stirred at about 20 °C for at least 5 min. L-Lactide (0.29 g, 2.0 mmol, 205 equiv. vs. Y) solution in toluene is added to the catalyst/initiator solution, and once consumed, a beta-lactone (ethyl-(R)-beta-butyrolactone, (R)-BL^{Et}, 0.20 g, 2.0 mmol, 205 equiv. vs. Y) solution in toluene is added. The reaction mixture is stirred at a temperature of at least about 20°C for a suitable period of time and finally quenched by addition of acetic acid (1.6 mol·L⁻¹ solution in toluene). The resulting mixture is concentrated to dryness under vacuum and the conversion can be determined by ¹H NMR analysis of the residue in CDCl₃. The crude copolymer is then dissolved in CH₂Cl₂ and precipitated in cold pentane, filtered, and dried. The final copolymer can then be analyzed using techniques known in the art.

### Example 3: Simultaneous co-polymerisation of L-lactide with diolide

Example 3 concerns a simultaneous copolymerization experiment. In a glovebox, a Schlenk flask is charged with Y(N(SiHMe₂)₂)₃(THF)₂ (6.3 mg, 0.01 mmol) and {ONNO(Cumyl)₂}H₂ (7.7 mg, 0.01 mmol), and toluene is next added. To this solution, iPrOH (76 µL of a 1% (v/v) solution in toluene, 0.01 mmol, 1 equiv vs. Y) is added under stirring at room temperature and then stirred at about 20 °C for at least 5 min. A mixture of diolide (0.29 g, 1.46 mmol, 146 equiv. vs. Y) and L-Lactide (0.21 g, 1.46 mmol, 146 equiv. vs. Y) in toluene is added rapidly to the catalyst/initiator solution. The reaction mixture is stirred at a temperature of at least about 20°C for a suitable period of time and finally quenched by addition of acetic acid (1.6 mol·L⁻¹ solution in toluene). The resulting mixture is concentrated to dryness under vacuum and the conversion can be determined by ¹H NMR analysis of the residue in CDCl₃. The crude copolymer is then dissolved in CH₂Cl₂ and precipitated in cold pentane, filtered, and dried. The final copolymer can then be analyzed using techniques known in the art.

### Example 4: Sequential copolymerisation of L-lactide with diolide

In a sequential copolymerization experiment, in the glovebox, a Schlenk flask is charged with Y(N(SiHMe₂)₂)₃(THF)₂ (6.3 mg, 0.01 mmol) and {ONNO(Cumyl)₂}H₂ (7.7 mg, 0.01 mmol), and toluene is next added. To this solution, iPrOH (76 µL of a 1% (v/v) solution in toluene, 0.01 mmol, 1 equiv vs. Y) is added under stirring at room temperature and then stirred at about 20 °C for at least 5 min. L-Lactide (0.21 g, 1.46 mmol, 146 equiv vs. Y) solution in toluene is added to the catalyst/initiator solution, and once consumed, the diolide (0.29 g, 1.46 mmol, 146 equiv vs. Y) solution in toluene is added.

The reaction mixture is stirred at a temperature of at least about 20°C for a suitable period of time and finally quenched by addition of acetic acid (1.6 mol·L⁻¹ solution in toluene). The resulting mixture is concentrated to dryness under vacuum and the conversion can be determined by ¹H NMR analysis of the residue in CDCl₃. The crude copolymer is then dissolved in CH₂Cl₂ and precipitated in cold pentane, filtered, and dried. The final copolymer can then be analyzed using techniques known in the art.

### Example 5: Simultaneous copolymerisation of L-lactide with beta-lactone and diolide

This example illustrates a simultaneous copolymerization experiment. In a glovebox, a Schlenk flask is charged with Y(N(SiHMe₂)₂)₃(THF)₂ (6.3 mg, 0.01 mmol) and {ONNO(Cumyl)₂}H₂ (7.7 mg, 0.01 mmol), and toluene is next added. To this solution, iPrOH (76 µL of a 1% (v/v) solution in toluene, 0.01 mmol, 1 equiv vs. Y) is added under stirring at room temperature and then stirred at about 20 °C for at least 5 min. A mixture of diolide (0.19 g, 0.96 mmol, 95 equiv vs. Y), (R)-BL^{Et} (0.15 g, 1.52 mmol, 152 equiv vs. Y) and L-Lactide (0.16 g, 1.10 mmol, 110 equiv vs. Y) in toluene is added rapidly to the catalyst/initiator solution. The reaction mixture is stirred at a temperature of at least about 20°C for a suitable period of time and finally quenched by addition of acetic acid (1.6 mol·L⁻¹ solution in toluene). The resulting mixture is concentrated to dryness under vacuum and the conversion can be determined by ¹H NMR analysis of the residue in CDCl₃. The crude copolymer is then dissolved in CH₂Cl₂ and precipitated in cold pentane, filtered, and dried. The final copolymer can then be analyzed using techniques known in the art.

### Example 6: Sequential copolymerisation of L-lactide with beta-lactone and diolide

This example illustrates a sequential copolymerization experiment. In a glovebox, a Schlenk flask is charged with Y(N(SiHMe₂)₂)₃(THF)₂ (6.3 mg, 0.01 mmol) and {ONNO(Cumyl)₂}H₂ (7.7 mg, 0.01 mmol), and toluene is next added. To this solution, iPrOH (76 µL of a 1% (v/v) solution in toluene, 0.01 mmol, 1 equiv vs. Y) is added under stirring at room temperature and then stirred at about 20 °C for at least 5 min. In this example, first L-Lactide (0.16 g, 1.10 mmol, 110 equiv vs. Y) solution in toluene is added to the catalyst/initiator solution then, once consumed, (R)-BL^{Et} (0.15 g, 1.52 mmol, 152 equiv vs. Y) solution is added and then, once consumed, the diolide (0.19 g, 0.96 mmol, 95 equiv vs. Y) solution in toluene is added.

The reaction mixture is stirred at a temperature of at least about 20°C for a suitable period of time and finally quenched by addition of acetic acid (1.6 mol·L⁻¹ solution in toluene). The resulting mixture is concentrated to dryness under vacuum and the conversion may be determined by ¹H NMR analysis of the residue in CDCl₃. The crude lactide copolymer is then dissolved in CH₂Cl₂ and precipitated in cold pentane, filtered, and dried. The final copolymer can then be analyzed using techniques known in the art.

### Example 7: Simultaneous copolymerisation of PLLA with beta-lactone and diolide

This is another example of a simultaneous copolymerization experiment. In this example a PLA was reacted with a beta-lactone and a diolide.

In the glovebox, a Schlenk flask is charged with Y(N(SiHMe₂)₂)₃(THF)₂ (6.3 mg, 0.01 mmol), {ONNO(Cumyl)₂}H₂ (7.7 mg, 0.01 mmol) and PLLA (0.1 g, 10 kDA, 0.01 mmol, 1 equiv vs. Y) and toluene is next added. After stirring at room temperature at about 20 °C for at least 5 min, a mixture of the diolide (0.22 g, 1.13 mmol, 114 equiv vs. Y) and the beta-lactone (R)-BL^{Et} (0.18 g, 1.75 mmol, 175 equiv vs. Y) in toluene is added rapidly to the above solution. The reaction mixture is stirred at a temperature of at least about 20°C for a suitable period of time and finally quenched by addition of acetic acid (1.6 mol·L⁻¹ solution in toluene). The resulting mixture is concentrated to dryness under vacuum and the conversion can be determined by ¹H NMR analysis of the residue in CDCl₃. The crude copolymer is then dissolved in CH₂Cl₂ and precipitated in cold pentane, filtered, and dried. The final copolymer can then be analyzed using techniques known in the art.

## Claims

1. A process for the preparation of a lactide copolymer comprising the step of copolymerizing a lactide monomer and/or polylactic acid in the presence of at least one catalyst and optionally at least one initiator with
**a)** at least one second compound, wherein said second compound comprises
**a1)** at least one beta-lactone of formula (I), stereoisomers, racemics or mixtures thereof; 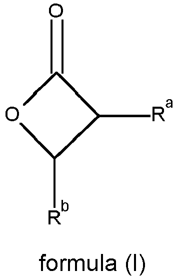
wherein each of **R^{a}** and **R^{b}** is independently hydrogen or is selected from the group comprising, C₂-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₛ₁-Z¹-**R^{g}**, -(CH₂)ₛ₂-C(=O)O**R^{h}**, and -(CH₂)ₛ₃-N(**Rⁱ**)₂,
wherein each group can be unsubstituted or substituted with one or more substituents each independently selected from the group comprising halogen, C₁₋₁₈alkyloxy, and-N(**R^{j}**)₂, and wherein each **R^{j}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
wherein **s1, s2** and **s3** are each independently an integer selected from 0 to 18;
wherein **Z¹** is selected from the group consisting of N, S, P and O;
wherein **R^{g}** and **R^{h}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl;
wherein each **Rⁱ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and
and/or
**a2)** at least one diolide of formula (II), stereoisomers, racemics or mixtures thereof 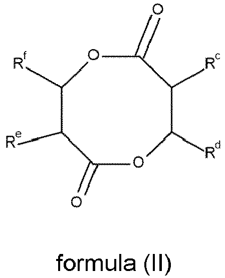
wherein each of **R^{c}, R^{d}, R^{e} and R^{f}** is independently hydrogen or is selected from the group comprising C₁-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl -(CH₂)ₜ₁-Z²-**R^{k}**, -(CH₂)ₜ₂-C(=O)O**R^{l}**, and -(CH₂)ₜ₃-N(**R^{m}**)₂, wherein each group can be unsubstituted or substituted with one or more substituents each independently selected from the group comprising halogen, C₁₋₁₈alkyloxy, and -N(**Rⁿ**)₂, and wherein each **Rⁿ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and
wherein **t1, t2** and **t3** are each independently an integer selected from 0 to 18;
wherein **Z²** is selected from the group consisting of N, S, P and O;
wherein **R^{k}** and **R^{l}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl;
wherein each **R^{m}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and
**b)** optionally one or more cyclic esters, stereoisomers, racemics, or mixtures thereof, wherein said cyclic ester is different from said second compound; and preferably wherein said cyclic ester is selected from the group comprising gamma-lactones, delta-lactones, epsilon-lactones, and glycolides, wherein each group can be unsubstituted or substituted with one or more substituents each independently selected from the group comprising C₁₋₆alkyl, C₁₋₆alkoxy, -NH₂, mono(C₁₋₆alkyl)amino, di(C₁₋₆alkyl)amino, C₁₋₆alkyloxyC₁₋₆alkyl and C₁₋₆alkyloxycarbonyl.

2. The process according to claim 1, wherein said lactide monomer is selected from the group consisting of L-lactide, D-lactide, meso-lactide, racemic lactide and any mixtures thereof.

3. The process according to claim 1 or 2, wherein said beta-lactone is a compound of formula (**Ia**), stereoisomers, racemics or mixtures thereof; 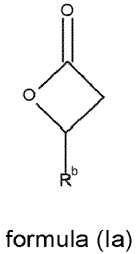
wherein **R^{b}** is hydrogen or is selected from the group comprising C₂₋₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₛ₁-Z¹-**R^{g},** -(CH₂)ₛ₂-C(=O)O**R^{h}**, and -(CH₂)ₛ₃-N(**Rⁱ**)₂, wherein each group can be unsubstituted or substituted with one or more substituents each independently selected from the group comprising halogen, C₁₋₁₈alkyloxy, and -N(**R^{j}**)₂, and wherein each **R^{j}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
wherein **s1, s2** and **s3** are each independently an integer selected from 0 to 18; and preferably from 0 to 12, and more preferably from 0 to 10, and most preferably selected from 0, 1, 2, 3, 4, 5, or 6;
wherein **Z¹** is selected from the group consisting of N, S, P and O; preferably selected from N, S or O; more preferably is O;
wherein **R^{g}** and **R^{h}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl;
wherein each **Rⁱ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and
preferably wherein **R^{b}** is selected from the group comprising C₂-₁₀alkyl, heteroC₁₋₁₀alkyl, heteroC₂₋₁₀alkenyl, -(CH₂)ₛ₁-Z¹-**R^{g}**, -(CH₂)ₛ₂-C(=O)O**R^{h}**, and -(CH₂)ₛ₃-N(**Rⁱ**)₂, and wherein each group is unsubstituted or substituted with one or more halogen; wherein **s1** is selected from 0, 1, 2 or 3; wherein **s2** is selected from 0, 1, 2 or 3, wherein **s3** is selected from 0, 1, 2 or 3, wherein Z¹ is selected from the group consisting of N, S, P and O; preferably selected from N, S or O; more preferably is O; wherein **R^{g}** and **R^{h}** are each independently selected from the group comprising C₁-₁₈alkyl, C₆₋₁₂aryl, and C₆₋₁₂arylC₁₋₁₈alkyl, and preferably are selected from the group comprising methyl, ethyl, *t*bu, allyl, phenyl, and benzyl; and wherein each **Rⁱ** is independently selected from the group comprising hydrogen and C₁₋₁₈alkyl.

4. The process according to any one of claims 1 to 3, wherein said beta-lactone is a compound of formula (**Ia**), stereoisomers, racemics or mixtures thereof; wherein **R^{b}** is selected from the group comprising ethyl, n-butyl, sec-butyl, isobutyl, *t*bu, isopropyl,-CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.

5. The process according to any one of claims 1 to 4, wherein said diolide is a compound of formula (**IIa**), stereoisomers, racemics or mixtures thereof; 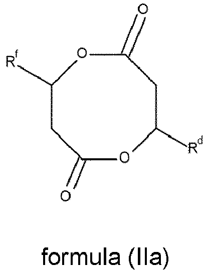
wherein each of **R^{d}** and **R^{f}** is independently hydrogen or is selected from the group comprising C₁-₁₈alkyl, C₂-₁₈alkenyl, C₂-₁₈alkynyl, C₆₋₁₂aryl, C₆₋₁₂arylC₁₋₁₈alkyl, heteroC₁₋₁₈alkyl, heteroC₂₋₁₈alkenyl, -(CH₂)ₜ₁-Z²-**R^{k}**, -(CH₂)ₜ₂-C(=O)O**R^{l}**, and -(CH₂)ₜ₃-N(**R^{m}**)₂, wherein each group can be unsubstituted or substituted with one or more substituents each independently selected from the group comprising halogen, C₁₋₁₈alkyloxy, and - N(**Rⁿ**)₂, and wherein each **Rⁿ** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl;
wherein **t1, t2** and **t3** are each independently an integer selected from 0 to 18; and preferably from 0 to 12, and more preferably from 0 to 10, and most preferably selected from 0, 1, 2, 3, 4, 5, or 6;
wherein **Z²** is selected from the group consisting of N, S, P and O; preferably selected from N, S or O; more preferably is O;
wherein **R^{k}** and **R^{l}** are each independently selected from the group comprising C₁-₁₈alkyl, C₂-₁₈alkenyl, C₂-₁₈alkynyl, C₆₋₁₂aryl, and C₆₋₁₂arylC₁₋₁₈alkyl;
wherein each **R^{m}** is independently selected from the group comprising hydrogen, C₁-₁₈alkyl, C₂-₁₈alkenyl, C₂-₁₈alkynyl, C₆₋₁₂aryl, and C₆₋₁₂arylC₁₋₁₈alkyl; and
preferably wherein **R^{d}** and **R^{f}** are each independently selected from the group comprising C₁₋₁₀alkyl, heteroC₁₋₁₀alkyl, heteroC₂₋₁₀alkenyl, -(CH₂)ₜ₁-Z²-**R^{k}**, -(CH₂)ₜ₂-C(=O)O**R^{l}**, and-(CH₂)ₜ₃-N(**R^{m}**)₂, and wherein each group is unsubstituted or substituted with one or more halogen; wherein **t1** is selected from 0, 1, 2 or 3; wherein **t2** is selected from 0, 1, 2 or 3, wherein **t3** is selected from 0, 1, 2 or 3, wherein **Z²** is selected from the group consisting of N, S, P and O; preferably selected from N, S or O; more preferably is O; wherein **R^{k}** and **R^{l}** are each independently selected from the group comprising C₁-₁₈alkyl, C₆₋₁₂aryl, and C₆₋₁₂arylC₁₋₁₈alkyl, and preferably are selected from the group comprising methyl, ethyl, *t*bu, allyl, phenyl, and benzyl; and wherein each **R^{m}** is independently selected from the group comprising hydrogen and C₁₋₁₈alkyl.

6. The process according to any one of claims 1 to 5, wherein said diolide is a compound of formula (**IIa**), stereoisomers, racemics or mixtures thereof; wherein R^{d} and R^{f} are each independently selected from the group comprising ethyl, methyl, n-butyl, sec-butyl, isobutyl, *t*bu, isopropyl, -CH₂C₄F₉, -C(=O)-O-allyl (-C(=O)O-CHCH=CH₂), -C(=O)-O-benzyl; -CH₂OMe, -CH₂Oallyl, -CH₂OBenzyl, -NH₂ and NHMe.

7. The process according to any one of claims 1 to 6, wherein said **cyclic ester** is selected from the group comprising glycolide, δ-valerolactone, γ-butyrolactone, γ-valerolactone, 4-methyldihydro-2(3H)-furanone, alpha-methyl-gamma-butyrolactone, ε-caprolactone, and any mixtures thereof, wherein each group can be unsubstituted or substituted with one or more substituents each independently selected from C₁₋₆alkyl or C₁₋₆alkoxy, preferably wherein said cyclic ester is selected from the group comprising glycolide, δ-valerolactone, γ-butyrolactone, γ-valerolactone, alpha-methyl-gamma-butyrolactone, and ε-caprolactone, and any mixtures thereof.

8. The process according to any one of claims 1 to 7, wherein the catalyst is an organometallic catalyst of formula **(III)** or **(IV),** 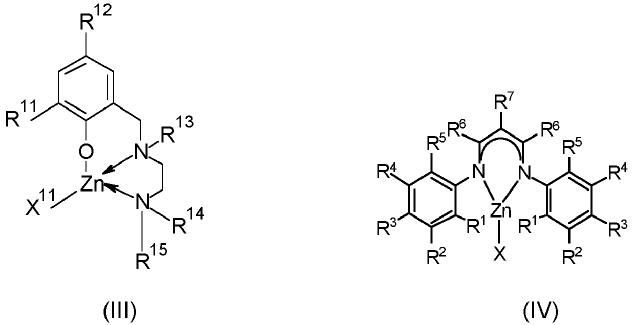 wherein
**R¹, R², R³, R⁴, R⁵, R⁶,** and **R⁷** are each independently selected from the group consisting of hydrogen, optionally substituted C₁₋₁₂alkyl, and an inert functional group, and wherein two or more of said groups can be linked together to form one or more rings;
**X** is selected from the group comprising -N(Si**R²⁷**₃)₂, C₁₋₁₂alkyl, C₁₋₁₂alkoxy, **-**N**R⁹R¹⁰** and -BH₄;
each **R²⁷** is independently selected from hydrogen or C₁₋₆alkyl;
each **R⁹** and **R¹⁰** is independently selected from hydrogen or C₁₋₆alkyl;
**R¹¹** and **R¹²** are each independently selected from the group consisting of C₁₋₁₀alkyl; C₁₋₁₀alkoxy, NO₂, and halogen;
**R¹³, R¹⁴,** and **R¹⁵** are each independently C₁₋₁₀alkyl, or **R¹³** and **R¹⁴** are covalently bound to each other and are each a methylene and **R¹⁵** is C₁₋₁₀alkyl;
**X¹¹** is selected from C₁₋₁₀alkyl, -O**R¹⁶** or -N(Si**R¹⁷**₃)₂;
**R¹⁶** is C₁₋₁₀alkyl; and
each **R¹⁷** is independently selected from hydrogen or C₁₋₆alkyl;
preferably the catalyst is selected from the group comprising [(NNO)ZnEt], [BDI]Zn(N(SiMe₃)₂), [BDI]Zn(Et), and {[BDI]Zn(O**R³⁰**)}₂, wherein **R³⁰** is C₁₋₆alkyl; preferably the catalyst is [BDI]Zn(N(SiMe₃)₂) or [(NNO)ZnEt].

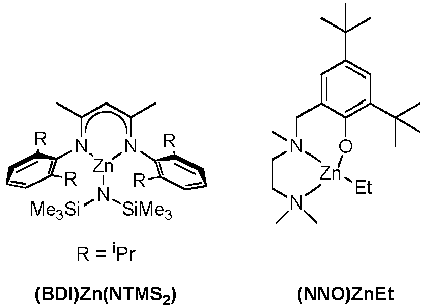

9. The process according to any one of claims 1 to 7, wherein the catalyst is selected from the group of complexes of formulae M(OSO₂CF₃)ₘ, M(N(OSO₂CF₃)₂)ₘ, M(**R²³**C(O)C**R²³**₂C(O)**R²³**)ₘ, and (**R²⁴**CO₂)ₘM, wherein **M** is a metal of Group 2, 3, including the lanthanide series, or Group 12, 13, 15, wherein each **R²³** is independently an optionally substituted C₁₋₁₂alkyl, wherein each **R²⁴** is independently a perfluorinated C₁₋₁₂alkyl or an aryl, and wherein **m** is the valence of M.

10. The process according to any one of claims 1 to 7, wherein the catalyst is selected from the group comprising dimeric phosphazene bases, or amines or guanidines, organic acids, sparteine, thiourea-amino derivaties, N-heterocyclic carbenes, 4-(dialkylamino)pyridines, amidines, phosphorus based phospines, phosphazenium derivatives and phosphazenes, metal amides; and compounds of general formula **M¹(Y¹,Y², ...Y^{p})_{q},** in which **M¹** is a metal selected from the group comprising the elements of columns 3 to 12 of the periodic table of the elements, and the elements Al, Ga, In, Tl, Ge, Sn, Pb, Sb, Ca, Mg and Bi; whereas **Y¹, Y²,** ... **Y^{p}** are each substituents selected from the group comprising C₁₋₂₀alkyl, C₆₋₃₀aryl, C₁₋₂₀alkoxy, C₆₋₃₀aryloxy, oxide, carboxylate, and halide groups, and **p** and **q** are integers of from 1 to 6;
preferably the catalyst is selected from the group comprising 1,5,7-triazobicyclo-[4,4,0]dec-5-ene (TBD), 1,8-diazabicyclo[5.4.0]undec-7-ene (DBU), 4-dimethylaminopyridine (DMAP), *tert*-butylimino-1,3-dimethylperhydro-1,3,2-diazaphosphine (BEMP); Sn(Oct)₂, Al(OiPr)₃, Ti(OiPr)₄, Ti(2-ethylhexanoate)₄, Ti(2-ethylhexyloxide)₄, Zr(OiPr)₄, Bi(neodecanoate)₃, (2,4-di-tert-butyl-6-(((2-(dimethylamino)ethyl)(methyl)amino)methyl)phenoxy)(ethoxy)zinc, and Zn(lactate)₂.

11. The process according to any one of claims 1 to 7, wherein the catalyst is selected from the group comprising the following rare-earth complexes:
M^{1a}L^{1a}, M^{1a}(L^{2a})₃, M^{1a}L^{3a}, M^{1a}L^{4a}, M^{1a}L^{1a}L^{2a}, M^{1a}L^{1a}L^{3a}, M^{1a}L^{2a}L^{3a}, M^{1a}L^{2a}L^{4a}, M^{1a}L^{3a}L^{4a}, M^{1a}L^{2a}L^{5a}, M^{1a}L^{1a}L^{2a}(donor)ₙ, M^{1a}L^{2a}L^{4a}(donor)ₙ, M^{1a}L^{2a}L^{5a}(donor)ₙ, [(donor)ₙM^{1a}L^{1a}(O**R^{3d}**-)]₂, [(donor)ₙM^{1a}L^{4a}(O**R^{3d}**-)]₂, halide or hydride complexes thereof (such as chloride or borohydride), homoleptic and dimeric forms thereof;
**M^{1a}** is rare earth metal selected from the group comprising Y, La, Sm, Tb, Lu, Nd, Yb, Sc, Er, Pr, Gd, Ho, and Eu,
the donor can be selected from THF, DME, or pyridine,
n is selected from 0, 1, or 2,
**L^{2a}** is selected from the group comprising -N**R^{3b}**₂, -CH₂-(Si**R^{3a}**Me₂)₂, -CH(SiMe₃)₂,-N(Si**R^{3a}**Me₂)₂, C₁₋₆alkyl, di(C₁₋₆alkyl)aminoC₁₋₆alkylC₆₋₁₀aryl, di(C₁₋₆alkyl)aminoC₆₋₁₀arylC₁₋₆alkyl, C₆₋₁₀aryl, -O**R^{3c}**, -S**R^{3c}**; and -PF₆; for example suitable L^{2a} can be selected from the group comprising -N(SiMe₃)₂, -N(SiHMe₂)₂, -NPh₂, -CH₂SiMe₃, -CH(SiMe₃)₂, -CH₃,-C₆H₄CH₂NMe₂, -CH₂(2-NMe₂)C₆H₄, -C₆H₅, -O*i*Pr, 2,6-*t*Bu₂C₆H₃O-, 4-MeC₆H₄O-, 4-MeOC₆H₄O-, CF₃CH₂O-, PhCH₂O-, 4-MeC₆H₄S-, 2,6-*t*Pr₂C₆H₃O-, -OPh, -OtBu, -OTf, and -PF₆,
wherein **R^{3a}** is selected from H or Me, **R^{3b}** is C₆₋₁₀aryl, **R^{3c}** is selected from the group comprising C₁₋₆alkyl, C₆₋₁₀aryl, C₁₋₆alkylC₆₋₁₀aryl, C₁₋₆alkyloxyC₆₋₁₀aryl, haloC₁₋₆alkyl, and C₆₋₁₀arylC₁₋₆alkyl,
**R^{3d}** is selected from C₆₋₁₀aryl, or C₁₋₆alkylC₆₋₁₀arylC₁₋₆alkyl,
**L^{1a}** is a tetradentate ligand of formula 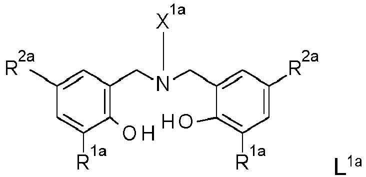
wherein
**R^{1a}** and **R^{2a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable R^{1a} and R^{2a} can be each independently selected from the group comprising -Cl, -F, -Br,-Me, -Et, -tBu, adamantly, -CMe₂Ph, -CPh₃, -CMe₂*t*Bu, and -CMe₂(*p*-CF₃Ph), and
**X^{1a}** is selected from the group comprising C₁₋₆alkyoxyC₁₋₆alkyl, di(C₁₋₆alkyl)aminoC₁₋₆alkyl; di(C₁₋₆alkyl)amino, heteroarylC₁₋₆alkyl, and heterocyclylC₁₋₆alkyl, for example suitable **X^{1a}** can be selected from the group comprising -(CH₂)₂OMe, -(CH₂)₂NMe₂, -(CH₂)₃NMe₂,-(CH₂)₂NEt₂, -CH₂(2-pyridyl), 0-(CH₂)₂(2-THF), -NMe₂, -(CH₂)₂*N*Benzoxazine, and -CH₂(2-furyl); wherein each of said groups can be unsubstituted or substituted with one or more C₁₋₆alkyl substituents,
**L^{3a}** is a ligand of formula 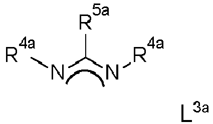
wherein **R^{4a}** is selected from the group comprising C₆₋₁₀aryl, C₁₋₆alkyl, diC₁₋₆alkylamino, C₁₋₆alkylC₆₋₁₀aryl, C₁₋₆alkyloxyC₆₋₁₀aryl, C₆₋₁₀arylC₁₋₆alkyl, and diC₁₋₆alkylaminoC₁₋₆alkylC₆₋₁₀aryl, or two **R^{4a}** together can form a C₁₋₆alkylene; and
wherein **R^{5a}** is selected from C₆₋₁₀aryl, -N(SiR^{3a}Me2)₂, or diC₁₋₆alkylamino, and
**L^{4a}** is a tetradentate ligand of formula 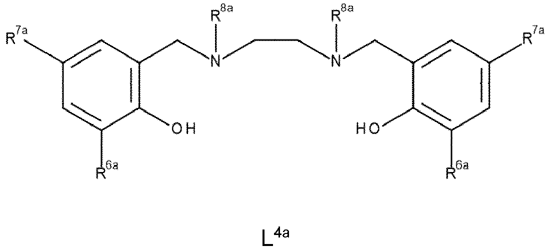
wherein **R^{6a}** and **R^{7a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable **R^{6a} and R^{7a}** can be each independently selected from the group comprising -Cl,-Me, -Et, -tBu, adamantly, -CMe₂Ph, -CPh₃, -CMe₂*t*Bu, and -CMe₂(*p*-CF₃Ph), and
wherein **R^{8a}** is selected from the group comprising C₁₋₁₀alkyl, C₃₋₁₀cycloalkyl, C₅₋₁₀aryl, and C₅₋₁₀arylC₁₋₁₀alkyl, and can for example be selected from the group comprising -Me, -Et,-*t*Bu, cyclohexyl and phenyl, and
L^{5a} is a tetradentate ligand of formula 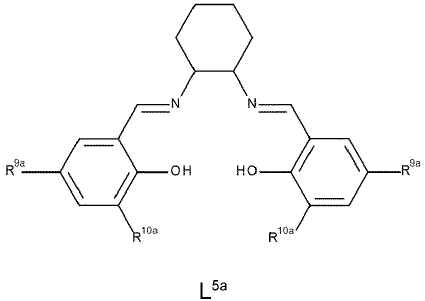
wherein **R^{9a} and R^{10a}** are each independently selected from the group comprising halo, C₁₋₁₀alkyl, C₃₋₁₂cycloalkyl, C₅₋₁₀arylC₁₋₆alkyl, and haloC₁₋₆alkylC₅₋₁₀arylC₁₋₆alkyl, for example suitable R^{9a} and R^{10a} can be each independently selected from the group comprising -Cl, -Me, -Et, -*t*Bu, adamantly, -CMe₂Ph, -CPh₃, -CMe₂*t*Bu, and -CMe₂(*p*-CF₃Ph).

12. The process according to any one of claims 1 to 7, wherein the **catalyst** is a complex of general formula **M^{2a}L^{6a}L^{7a},** in which
**M^{2a}** is Zr or Hf,
**L^{6a}** is selected from the group comprising C₁₋₁₂alkyl and -O**R^{3e}**; wherein **R^{3e}** is selected from the group comprising C₁₋₆alkyl, C₁₋₆alkylC₆₋₁₀aryl, C₆₋₁₀arylC₁₋₆alkyl, C₁₋₆ alkyloxyC₆₋₁₀aryl, and C₁₋₆alkyloxycarbonylC₁₋₆alkyl, and
L^{7a} is a ligand of formula

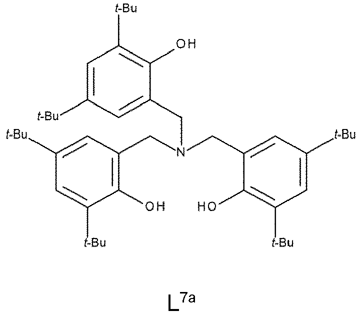

13. The process according to any one of claims 1 to 12, wherein the process is performed in the presence of at least one initiator of formula (V), 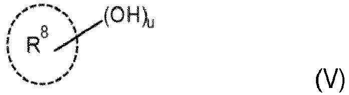 wherein **R⁸** is selected from the group comprising C₁₋₂₀alkyl, C₆₋₃₀aryl, and C₆₋₃₀arylC₁₋₂₀alkyl optionally substituted by one or more substituents Z³, wherein each Z³ is independently selected from the group comprising halogen, hydroxyl, C₁₋₆alkyl, C₁₋₆alkoxy, mono- or di-alkylamino, C₁₋₆alkyloxyC₁₋₆alkyl (-COR), C₁₋₆alkylcarbonyl (-CO₂R), thioC₁₋₆alkyl (-SR), -SO₂- C₁₋₆alkyl, -CON(R^{z1})₂, and N(R^{z2})COR^{z3}, wherein R^{z1}, R^{z2} and R^{z3} are each independently selected from the group consisting of hydrogen, C₁₋₆alkyl, C₆₋₁₀aryl, and C₁₋₆alkylC₆₋₁₀aryl, and
wherein u is an integer selected from the group consisting of the integers from 1 to 10; preferably from 1 to 5, more preferably u is an integer selected from 1, 2 or 3.

14. The process according to any one of claims 1 to 13, wherein said process is carried out at a temperature comprised between -60°C and 150°C, preferably between 0°C and 100°C, more preferably between 20°C and 80°C.

15. The process according to any one of claims 1 to 14, wherein the process is performed in the presence or absence (in bulk) of solvent, wherein when present said solvent is an aprotic polar solvent or an aprotic apolar solvent.

16. A lactide copolymer obtained or obtainable by a process according to any one of claims 1 to 15.

17. An article comprising a lactide copolymer according to claim 16 or a lactide copolymer prepared according to the process according to any one of claims 1 to 15.
